(19) **Europäisches Patentamt**

**European Patent Office**

**Office européen des brevets**

(11) **EP 0 753 960 B1**

(12) **EUROPÄISCHE PATENTSCHRIFT**

(45) Veröffentlichungstag und Bekanntmachung des Hinweises auf die Patenterteilung:
**26.01.2000 Patentblatt 2000/04**

(51) Int Cl.$^7$: **H04N 1/405**

(21) Anmeldenummer: **95110759.8**

(22) Anmeldetag: **10.07.1995**

(54) **Verfahren zur Herstellung einer Grautonschablone**

Method for producing grey-scale designs

Procédé pour la production de modèles à tonalités de gris

(84) Benannte Vertragsstaaten:
**AT CH DE ES FR GB IT LI NL**

(43) Veröffentlichungstag der Anmeldung:
**15.01.1997 Patentblatt 1997/03**

(73) Patentinhaber: **Schablonentechnik Kufstein Aktiengesellschaft**
**6330 Kufstein (AT)**

(72) Erfinder: **Hörfarter Siegfried**
**6344 Walchsee (AT)**

(74) Vertreter:
**TER MEER STEINMEISTER & PARTNER GbR**
**Mauerkircherstrasse 45**
**81679 München (DE)**

(56) Entgegenhaltungen:
**EP-A- 0 293 214       EP-A- 0 359 463**
**GB-A- 2 098 022       US-A- 4 350 996**

## EP 0 753 960 B1

**Beschreibung**

Die Erfindung bezieht sich auf ein Verfahren zur Herstellung einer Grautonschablone.

Es ist bereits allgemein bekannt, eine Halbtonreproduktion einer Original- bzw. Mustervorlage auf einem Film zu erzeugen, um anschließend unter Zuhilfenahme des Films eine Grautonschablone herzustellen.

Der Erfindung liegt die Aufgabe zugrunde, die Herstellung von Grautonschablonen zu vereinfachen.

Die Lösung der gestellten Aufgabe ist im Anspruch 1 angegeben. Vorteilhafte Ausgestaltungen der Erfindung sind den Unteransprüchen zu entnehmen. Der Oberbegriff basiert auf US-A- 4 350 996.

Durch das Verfahren nach der Erfindung wird die Verwendung eines Films vermieden, was die Herstellung einer Grautonschablone erheblich erleichtert und verbilligt.

Die mit dem erfindungsgemäßen Verfahren herstellbaren Grautonschablonen können z. B. flach bzw. eben oder zylindrisch ausgebildet sein. Eine Grautonschablone kann z. B. in Form eines zylindrischen Siebs mit gleichmäßiger Perforation vorliegen, das auf seiner Oberfläche eine Lackschicht trägt, die in Übereinstimmung mit der Mustervorlage bereichsweise entfernt worden ist. Eine Grautonschablone kann aber auch dadurch erhalten werden, daß zunächst auf einen zylindrischen Grundkörper mit durchgehender Mantelfläche eine Lackschicht aufgebracht wird, die in Übereinstimmung mit der Mustervorlage bereichsweise entfernt wird, wonach auf die so erhaltene Struktur ein Metall, z. B. Nickel, galvanisch aufgebracht wird. Nicht zuletzt kann die Grautonschablone aber auch in Form einer Tiefdruckschablone vorliegen.

Bei den genannten Lackschichten kann es sich um strahlungs- bzw. lichtempfindliche Schichten handeln, die sich z. B. durch Strahlung genügender Intensität wegbrennen bzw. verdampfen lassen. Die Lackschichten können aber auch Photopolymere enthalten, so daß bei Bestrahlung eine Vernetzung und Aushärtung der bestrahlten Bereiche erfolgt, wonach sich die unbelichteten Bereiche durch einen Entwicklungsvorgang herauslösen lassen.

Der genannte Strahl, mit dem der Schablonenrohling belichtet wird, kann beispielsweise ein fokussierter Licht- bzw. Laserstrahl oder aber auch ein Elektronenstrahl sein.

Durch das erfindungsgemäße Verfahren wird erreicht, daß sich die Mustervorlage unter Verwendung des Rasters unmittelbar in die strahlungsempfindliche Schicht des Schablonenrohlings übertragen läßt, ohne das Filmverarbeitungsschritte zwischengeschaltet sind, so daß sich Grautonschablonen mit sehr hoher Genauigkeit und infolge der ausschließlichen Anwendung elektronischer Signalverarbeitungsmittel auch sehr schnell herstellen lassen.

Dabei ist es möglich, die Mustervorlage zeilen- oder spaltenweise abzutasten, um zumindest Teile von Zeilen oder Spalten als Grauwerttabelle zwischenzuspeichern. Die Mustervorlage kann aber auch als zweidimensionale Grauwerttabelle zwischengespeichert werden, wenn genügend Speicherplatz zur Verfügung steht.

Nach einer vorteilhaften Ausgestaltung der Erfindung werden die Grautonzellen in Feinzellen unterteilt, wobei ein Vergleich von Grautonwerten der Feinzellen mit dem Referenz-Grautonwert erfolgt. Dadurch lassen sich Grautonschablonen mit noch höherem Auflösungsvermögen herstellen.

Die Unterteilung der Grautonzellen in Feinzellen kann vorteilhaft erst dann erfolgen, wenn die für die Bestrahlung des Schablonenrohlings auszulesende Grautonzelle aufgerufen wird. Hierdurch wird der Bedarf an elektronischem Speicherplatz weiter verringert und das Herstellungsverfahren zusätzlich schneller.

Die Grautonwerte der Feinzellen können in Abhängigkeit der Grautonwerte von Feinzellen wenigstens einer benachbarten Grautonzelle oder in Abhängigkeit des Grautonwerts wenigstens einer benachbarten Grautonzelle vorgegeben werden, was sich häufig für die Verbesserung des visuellen Eindrucks von mit der Grautonschablone hergestellten Reproduktionen der Mustervorlage als vorteilhaft erwiesen hat. Die Grautonwerte für die jeweiligen Feinzellen brauchen also nicht für jede Grautonzelle von vorn herein vorhanden bzw. zwischengespeichert zu sein, sondern können in dem Augenblick, wo sie benötigt werden, z. B. durch Interpolation oder andere Maßnahmen erstellt werden.

Es wurde eingangs bereits erwähnt, daß die Herstellung der erfindungsgemäßen Grautonschablone unter Verwendung eines Rasters erfolgt. Dieser Raster ist erforderlich, um den Strahl zur Belichtung des Schablonenrohlings ein- bzw. ausschalten zu können. Werden die jeweiligen Grautonwerte der Grautonzellen oder Feinzellen der Grauwerttabelle mit dem Referenz-Grautonwert der Referenzzelle oder der Einzelzellen verglichen, so läßt sich je nach Vergleichsergebnis (größer oder kleiner) ein entsprechendes Steuersignal für die Ein- und Ausschaltung des Strahls erzeugen. Stellt man sich vor, daß dieser Raster über der zwischengespeicherten Grauwerttabelle zu liegen kommt, so kann er als virtueller Raster verstanden werden, da er in diesem Moment nicht tatsächlich existiert. Wurde jedoch mit dem erfindungsgemäßen Verfahren eine Grautonschablone hergestellt, so läßt sich der Raster auch auf dieser Grautonschablone erkennen. Der Raster selbst kann additionsfähig oder nicht-additionsfähig sein. Im zuerst genannten Fall sind die Inhalte bzw. Strukturen der Rasterzellen gleich; im zuletzt genannten Fall können dagegen die Rasterzellen unterschiedliche Inhalte bzw. Strukturen aufweisen.

Nach einer vorteilhaften Ausgestaltung der Erfindung ist die Referenzzelle des Rasters aus Einzelzellen zusammengesetzt, die wenigstens zum Teil unterschiedliche Referenz-Grautonwerte enthalten. Dabei ist die Struktur der Referenzzelle so gewählt, daß die Einzelzellen über ein zweifach indiziertes Array $z_x$, $z_y$ adressiert werden können, um die Referenz-Grautonwerte auszulesen. Die Referenzzelle kann hierbei als Rasterzelle des z. B. additionsfähigen Rasters betrachtet werden. Die Referenz-Grautonwerte können jetzt spiralförmig vom Rand der Referenzzelle zu deren Zentrum hin ansteigen oder abfallen. Auch hierdurch läßt sich ein besserer visueller Eindruck einer mit der erfindungsgemäßen Grautonschablone hergestellten Reproduktion der Mustervorlage erzielen.

Nach einer anderen vorteilhaften Ausgestaltung der Erfindung ist der Raster relativ zur Mustervorlage bzw. der sie darstellenden Grauwerttabelle gedreht. Das bedeutet z. B., daß die vertikalen Linien des Rasters gegenüber dem vertikalen Bildrand um einen gewissen Winkel geneigt sind. Der Vorteil liegt darin, daß dann, wenn mehrere Grautonschablonen mit jeweiligen Rastern unterschiedlicher Neigung bzw. Drehung hergestellt werden, die beim Mehrfarbendruck unter Verwendung dieser Grautonschablonen mit unterschiedlichen Rasterdrehungen erzeugten Reproduktionen praktisch keine Moire-Erscheinungen bzw. Rasterschwebungen mehr aufweisen.

Nach einer weiteren vorteilhaften Ausgestaltung der Erfindung ist der Raster aus additionsfähigen Rasterzellen aufgebaut, die jeweils innerhalb einer Referenzzelle liegen, die größer als die Rasterzelle ist.

Die Referenzzelle kann dann nach wie vor rechteckig oder quadratisch ausgebildet sein, so daß man die Adressierungsmöglichkeit zum Aufrufen der Einzelzellen über ein zweifach indiziertes Array $z_x$, $z_y$ beibehalten kann. Andererseits läßt sich jetzt aber auf andere als rechteckige polygonale Rasterzellen zurückgreifen, beispielsweise auf hexagonale. Auch solche mit RANDOM-Struktur sind möglich.

Der Vorteil liegt darin, daß jetzt ein weiteres Mittel an die Hand gegeben wird, um Moire-Erscheinungen bzw. Rasterschwebungen zu begegnen, beispielsweise im Hinblick auf einen bereits vorhandenen Siebraster in einem Schablonenrohling oder im Hinblick auf die Verwendung mehrerer Grautonschablonen beim Mehrfarbendruck.

Nach einer vorteilhaften Weiterbildung der Erfindung ist der Raster über die Ränder der Mustervorlage kontinuierlich fortgesetzt. Dies ist beispielsweise dann der Fall, wenn eine Mustervorlage über den gesamten Umfang eines zylindrischen Schablonenrohlings gelegt wird und sich der obere Bildrand der Mustervorlage an deren unteren Bildrand anschließt. Entsprechendes gilt auch für den Fall, daß mehrere identische Mustervorlagen so in Umfangsrichtung über den zylindrischen Schablonenrohling gelegt werden, daß zwischen den Mustervorlagen keine Lücken mehr vorhanden sind. Auch gilt dies für Vergrößerungen in Längsrichtung des zylindrischen Schablonenrohlings oder für den Fall, daß mehrere Mustervorlagen in dessen Längsrichtung aneinandergelegt werden.

Das oben Gesagte gilt aber auch im Falle von ebenen Grautonschablonen für den Fall, daß in unterschiedlichen Richtungen wiederholt Mustervorlagen eng aneinander angrenzen.

Dadurch, daß der Raster über die Ränder der Mustervorlagen kontinuierlich fortgesetzt wird, lassen sich Bildstreifen zwischen aneinandergrenzenden reproduzierten Mustervorlagen vermeiden, die sonst die Qualität der Gesamtreproduktion stören würden. Würde der Raster an den Rändern der Mustervorlage nicht kontinuierlich fortgesetzt, so könnten sich dort z. B. Rasteröffnungen überlagern, was zu einer Größenveränderung dieser Rasteröffnungen und damit zu Bildung der genannten Streifen führen würde.

Die kontinuierliche Fortsetzung des Rasters von Mustervorlage zu Mustervorlage wird z. B. dadurch erzielt, daß der Raster eine zusätzliche Feindrehung und Stauchung bzw. Streckung erfährt. Dabei kann die Stauchung bzw. Streckung in unterschiedlichen Richtungen der Mustervorlage bzw. der Grauwerttabelle verschieden sein.

Wird der Raster über die Ränder der Mustervorlage kontinuierlich fortgesetzt, so werden auch die Koordinaten der Einzelzellen der Referenzzelle durch eine lineare Transformation der Koordinaten der Grautonzellen bzw. der Koordinaten der Feinzellen bestimmt. Die Idee ist, daß die ursprüngliche Beziehung zwischen den Grautonwerten der Grautonzelle bzw. der Feinzellen einerseits und den Referenz-Grautonwerten der Referenzzelle bzw. der Einzelzellen anderseits erhalten bleibt.

Wie bereits eingangs erwähnt, können Mustervorlage und Raster auf einen rotierenden, zylindrischen Schablonenrohling übertragen werden. Dabei kann auf dem zylindrischen Schablonenrohling eine strahlungsempfindliche Schicht bzw. Lackschicht liegen, die z. B. durch den genannten Strahl weggebrannt oder polymerisiert werden kann. Der zylindrische Schablonenrohling kann ein Siebzylinder sein, der gleichmäßig perforiert ist und auf seiner Oberfläche die strahlungsempfindliche Schicht trägt.

Die Erfindung wird nachfolgend unter Bezugnahme auf die Zeichnung näher beschrieben. Es zeigen:

**Figur 1** eine Mustervorlage, die zur Gewinnung von Grautonwerten entlang von Spalten optisch abgetastet wird;
**Figur 2** eine entsprechend der abgetasteten Mustervorlage aufgebaute Grautontabelle mit Grautonzellen, die jeweils einen der abgetasteten Grautonwerte der Mustervorlage enthalten;
**Figur 3** jeweils aus mehreren Mustervorlagen zusammengestellte Additionsbilder auf einem Siebzylinder;
**Figur 4** einen quadratischen, virtuellen Raster, der einem der Additionsbilder nach Figur 3 überlagert wird;
**Figur 5** ein bei der Gravur entstehendes Muster, welchem der virtuelle Raster überlagert ist;
**Figur 6** auf dem Umfang eines Siebzylinders vorhandene Raster, die an den oberen und unteren Bildrändern nicht zusammenpassen;
**Figur 7** einen Verfahrensschritt zur Korrektur des Rasters an einer Stoßstelle zwischen oberem und unterem Bildrand;
**Figur 8** Raster, die im Bereich von oberen und unteren Bildrändern so korrigiert sind, daß sie dort keine Diskontinuitäten mehr aufweisen;

**Figur 9** einen Verfahrensschritt zur Korrektur des Rasters mittels einer affinen Verzerrung;

**Figur 10** den affin verzerrten Raster innerhalb eines einzigen Additionsbildes;

**Figur 11** ein Rasterbild, erhalten bei Verwendung des Rasters nach Figur 10, wenn man die aufgerasterten Additionsbilder in Längsrichtung des Siebzylinders zusammenfügt, wobei bei jeder Addition der Umfangsversatz der Raster berücksichtigt wird;

**Figur 12** die Unterteilung einer Grautonzelle in Feinzellen;

**Figur 13** die Gewinnung von Grautonwerten für die jeweiligen Feinzellen nach Figur 12 mittels Interpolation;

**Figur 14** die Durchführung einer Belichtung bzw. Aufrasterung eines Schablonenrohlings;

**Figur 15** den Aufbau einer Referenzzelle des Rasters;

**Figur 16** den Zusammenhang zwischen einer Referenzzelle des Rasters und einer verzerrten Referenzzelle, die nach Verzerrung des Rasters vorliegt;

**Figur 17** die Bildung eines Additionsbildes durch Mehrfachaddition der Grauwerttabelle;

**Figuren 18 bis 21** Sonderfälle für Anschnittbedingungen der Grautonzellen;

**Figuren 22 bis 25** Flußdiagramme zur Erläuterung des Ablaufs des erfindungsgemäßen Verfahrens;

**Figur 26** den Aufbau einer anderen Referenzzelle des Rasters;

**Figur 27** eine quadratische Referenzzelle, die eine hexagonale Rasterzelle enthält; und

**Figur 28** eine schematische Gesamtansicht einer Vorrichtung zur Durchführung des erfindungsgemäßen Verfahrens.

Das nachfolgend beschriebene Ausführungsbeispiel bezieht sich auf die Herstellung von Siebdruckschablonen, obwohl, wie bereits eingangs erwähnt, auch andere Schablonen, z. B. Tiefdruckschablonen, mit dem erfindungsgemäßen Verfahren herstellbar sind. Bei der Gravur von Siebdruckschablonen auf Laserengravern wird ein fokussierter Laserstrahl über die Oberfläche eines beispielsweise mit Lack vollständig abgedeckten Siebzylinders bewegt. Meistens beschreibt hierbei der Fokuspunkt auf der Lackschicht eine Schraubenlinie, weil man z. B. den Siebzylinder in eine Drehbewegung versetzt und gleichzeitig die Optik, welche den Laserstrahl fokussiert, in der Achsrichtung des Siebzylinders verschiebt. Es ist aber auch möglich, jeweils eine Spur entlang eines Querschnittskreises des Siebzylinders zu gravieren und dann, wenn eine Umfangslinie graviert ist, den Gravurkopf um eine Spurbreite vorzuschieben. Durch die starke Konzentration der Strahlungsenergie im Fokuspunkt wird der Lack abgebrannt, wenn der Laserstrahl eingeschaltet ist und zurück bleibt das metallische Sieb unterhalb der Lackschicht, welches jetzt in seiner äußeren Lackschicht ein entsprechendes Muster trägt. An den Stellen, an welchen der Lack abgetragen ist, liegt das Sieb offen und ist für Druckfarben durchlässig.

Auf solchen Laserengravern war es bisher üblich, nur vollaufgerasterte zylindrische Schablonen zu erzeugen. Die Gründe hierfür lagen in der Schwierigkeit, Gravurinformationen so herzustellen, daß die in einem Halbtonbild (Fotografie) aufscheinenden Grauwerte einigermaßen realistisch auf eine bereits mit einer Siebstruktur versehene Oberfläche übertragen werden können, ohne daß Moire-Effekte oder sonstige Zusammenballungen von Farbpunkten den bildmäßigen Eindruck im Druckbild stören. Üblicherweise wird eine bildmäßige Mustervorlage mit Hilfe eines Scanners optisch abgetastet. Die Daten werden dann aufbereitet und auf einem Speichermedium abgelegt. Nach entsprechender Bearbeitung dieser Bilddaten werden sie auf einem Laserengraver dazu verwendet, z. B. auf einer mit Lack abgedeckten zylindrischen Siebhülse ein Musterbild zu gravieren. Alle diese Vorgänge werden durch entsprechende Rechner bzw. Mikroprozessoren gesteuert.

Beim erfindungsgemäßen Verfahren wird zunächst die Bildstruktur gebildet, und diese wird dann entsprechend den nachzubildenden Grautönen aufgerastert. Gleichzeitig wird die Bildstruktur so ausgebildet, daß sie auf den Umfang des Siebzylinders mit einer ganzen Zahl gleichmäßig verteilter Bildmotive paßt. Dabei wird die Ausbildung visuell erkennbarer Nahtstellen vermieden.

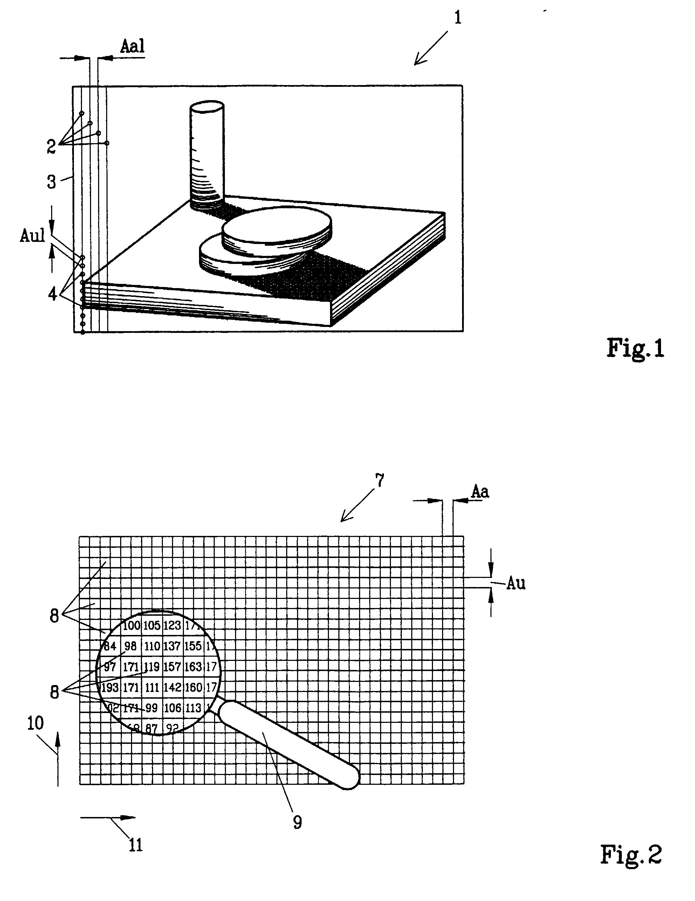

Figur 1 soll ein Original bzw. eine Mustervorlage 1 darstellen, welche ähnlich einer Fotografie dank unterschiedlicher Grautöne und nicht so sehr aufgrund scharfer Konturen einem Betrachter den Eindruck realer Objekte vermittelt. Ein an sich bekannter Bildscanner liest mittels eines optischen Lesekopfs entlang von Lesespuren 2 die an den Bildpunkten aufscheinenden Grautonwerte. Die Lesespuren 2 laufen hierbei parallel zum linken Bildrand 3. Bei diesem Lese- oder Scanvorgang wird die von einem beleuchteten Bildpunkt 4 zurückgeworfene Remission vom Lesekopf aufgefangen und einer Fotozelle zugeleitet, die hieraus ein elektrisches, analoges Signal formt. Dieses Signal wird dann z. B. durch einen ebenfalls bekannten AD-Wandler in ein digitales Signal umgesetzt. Das Signal kann z. B. ein Zahlenwert zwischen 0 und 255 sein, welcher die Intensität des am Bildpunkt vorliegenden Grau- oder Schwarzwerts wiedergibt. Hierbei legt man etwa für Weiß den Wert 0 und für ein tiefes Schwarz den Wert 255 fest. Solche Bildpunkte 4 befinden sich in von vornherein festgelegten Abständen; sie sind natürlich nicht real am Bild aufgebracht, sondern dieses rückt relativ zum Lesekopf um den festgelegten Höhenabstand Aul dieser Lesepunkte vor oder nach jedem Lesevorgang weiter. Ebenso steht die horizontale Distanz Aal zwischen den Lesespuren 21 von vornherein fest. Diese Distanzen werden zweckmäßig so gewählt, daß sie jenen Distanzen entsprechen, welche bei der später erfolgenden Gravur der Grautonschablone sinnvollerweise zur Anwendung gelangen können. So ist es z. B. sinnvoll, diese Abstände mit 50 oder 100 µm zu wählen, weil bei einer Gravur mit Hilfe eines $CO_2$-Lasers ein Fokusdurchmesser von 70 bis 100 µm erreicht werden kann und es ist daher nicht sehr zweckmäßig, die Gravurlinien enger zu legen. Eine Vergrößerung des Fokusdurchmessers bis etwa 200µm ist hingegen jederzeit durchführbar und für gewisse Anwendungsfälle auch sinnvoll. Entsprechend steigen dann die Abstände Aal und Aul. Die auf die beschriebene Weise ermittelten Grautonwerte werden nun in einem Speichermedium festhalten, etwa auf einer Magnetspeicherplatte oder in einem entsprechend groß dimensionierten RAM-Bereich eines Computers.

Dies ist in Figur 2 symbolisch dargestellt. Die Figur 2 soll einen Speicherbereich versinnbildlichen, der in weiterer Folge als Grauwerttabelle 7 angesprochen wird. Diese Grauwerttabelle 7 enthält in ihren einzelnen Speicher- bzw. Grautonzellen 8 jeweils einen Zahlen- bzw. Grautonwert, welcher der Remission der zugehörigen Bildpunkte 4 entspricht und ein Maß für den Grauton des Bildpunkts 4 ist. Nach der bereits getroffenen Annahme liegen diese Werte zwischen 0 und 255. Um den Inhalt der Grautonzellen 8 besser zu veranschaulichen, ist ein Teil des Speichers - jener unter der Lupe 9 - vergrößert dargestellt. Es ist zu beachten, daß das Grautonbild der gelesenen und in der Grauwerttabelle 7 festgehaltenen Mustervorlage 1 noch in keiner Weise auf den Umfang und die Länge des Siebzylinders passen muß. Es wird daher die gespeicherte Mustervorlage 1 entwedervergrößert oder aber mehrfach wiederholend aufdem Umfang des Siebzylinders aufgetragen. Ggf. werden beide Maßnahmen angewendet. Durch die Kombination dieser Maßnahmen ist es stets möglich, den Umfang des Siebzylinders lückenlos auszufüllen. Auch in der Achsrichtung 11 des Siebzylinders ist mehrfache Wiederholung (= Musteraddition) möglich, wenn die Breite der gespeicherten Mustervorlage 1 bzw. des Grautonbildes kleiner als die Länge des Siebzylinders ist. Ob auch der Vergrößerungsfaktor in der Achsrichtung 11 unterschiedlich von jenem in Umfangsrichtung 10 gehalten werden kann, hängt von dem darzustellenden Muster oder Motiv ab.

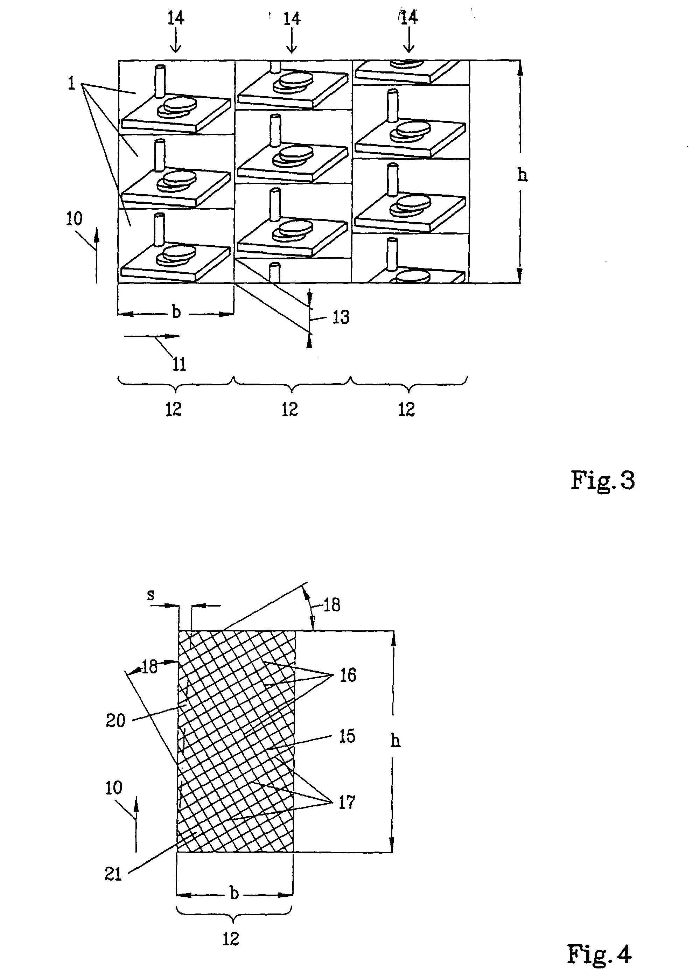

Ein solches mehrfach addiertes Grautonbild zeigt die Figur 3. Die Mustervorlagen 1 sind entsprechend vergrößert oder verkleinert mehrmals in der Umfangsrichtung 10 innerhalb eines Längsabschnitts 12 aufgetragen. In der Achsrichtung 11 werden gleichartige Längsabschnitte 12 mehrfach aufgetragen, wobei sie relativ zueinander jeweils um die Versatzstrecke 13 in Umfangsrichtung versetzt werden. Die Versatzstrecke 13 wird später in Formelbezügen verwendet und dort mit dem Symbol v bezeichnet werden; sie kann beliebig groß gewählt werden oder Null sein. Das innerhalb eines Längsabschnitts 12 befindliche, durch Addition von Mustervorlagen 1 in Umfangsrichtung erzeugte Bild soll in weiterer Folge als Additionsbild 14 angesprochen werden. Die Höhe eines solchen Additionsbildes 14 entspricht dem Umfang h des zu gravierenden Siebzylinders. Das Additionsbild 14 muß nun keineswegs in der gleichen Weise festgehalten werden wie die Mustervorlage 1, denn alle Grautonwerte sind ja bereits in der Grauwerttabelle 7 gespeichert. Es genügt die Zahl der Wiederholungen in Umfangsrichtung vorzumerken, wodurch gemeinsam mit der Grauwerttabelle 7 das Additionsbild 14 eindeutig definiert ist. Jetzt können auch jeder Grautonzelle 8 der Grauwerttabelle 7 endgültige Abmessungen Aa in Achsrichtung 11 und Au in Umfangsrichtung 10 zugeschrieben werden. Diese Abmessungen entsprechen den Leseabständen Aal und Aul, multipliziert mit dem für die jeweilige Richtung geltenden Vergrößerungs- oder Verkleinerungsfaktor.

Die Figur 4 zeit einen quadratischen virtuellen Raster 15, der einem Längsabschnitt 12, also einem Additionsbild 14 überlagert wird, und anhand dessen jene Bedingungen für eine Aufrasterung festgelegt werden, die im späteren Druckbild einem Beschauer den Eindruck eines Grautonbildes vermitteln. Dieser Raster kann unabhängig von der Breite b des Additionsbildes 14 festgelegt werden. Nur muß dann die Aufrasterung während der Gravurarbeit erfolgen. In diesem Fall wird von einer "on fly"-Rasterung gesprochen. Bei dieser Methode zur Aufrasterung eines Bildes wird der Raster in Längsrichtung kontinuierlich aber unabhängig von der Bildbreite b mitgezogen. Der Raster kann aber auch so gebildet werden, daß sich dieser mit der Breite b des Additionsbildes genau wiederholt. Dies wird insbesondere dann zweckmäßig sein, wenn die gesamte Information - also nicht die der einfachen Mustervorlage 1 sondern jene des aufgerasterten Grautonbildes - in einer eigenen Arbeitsdatei festgehalten und bei der Gravur durch wiederholendes Lesen dieserArbeitsdatei ausgelesen und in Gravurbefehle umgesetzt wird. In diesem Falle ist im allgemeinen eine affine Verzerrung des Rasters erforderlich, damit der Raster nicht nur in Umfangsrichtung 10 genau auf den Umfang des Siebzylinders paßt sondern mit der gleichen Genauigkeit auch auf die Breite b des Additionsbildes. Diese Breite wird auch als Längsrapport bezeichnet. Der virtuelle Raster 15 wird bei der durch einen Rechner erfolgenden Aufrasterung nur durch eine einzige Rasterzelle (Referenzzelle) dieses Rasters realisiert. Das heißt, daß nur der Inhalt einer Rasterzelle 21 in oder auf einem geeigneten Medium (RAM, Festplatte) getrennt von der Mustervorlage 1 und ebenso getrennt vom Additionsbild 14 festgehalten wird. Dies ist auch der Grund für die Bezeichnung als virtueller Raster. Beim Inhalt der Rasterzelle 21 handelt es sich um Grautonwerte, die für eine große Zahl (64 bis 6400) von Teilbereichen der Rasterzelle 21 in entsprechenden Abstufungen festgeschrieben werden. Hierauf wird später noch genauer eingegangen. Die Netzlinien 16 und 17 des virtuellen Rasters 15 sollen mit einem beliebigen Winkel 18 gegenüber dem linken Bildrand 3 und dem oberen Bildrand 19 ausgerichtet werden können. Durch die freie Wahl dieses Winkels sollen bei dem Gebrauch der nach dem Verfahren hergestellten Druckschablonen Moire-Bildungen im erzeugten Druckbild möglichst unterdrückt werden. Solche Moire-Bildungen treten bei einer Schablone auf, wenn sich wiederholende Strukturen (Grautonaufrasterung) mit anderen periodischen Strukturen (Siebstruktur) überlagern. Verstärkt wird dieser Effekt, wenn sich die Druckbilder mehrerer solcher Schablonen überlagern (Mehrfarbendruck, Trichromie). Eine Unterdrückung derartiger Moire-Bildungen ist dann erreichbar, wenn die angegebenen Winkel 18 bei den Schablonen eines Mustersatzes willkürlich und vor allem zueinander unterschiedlich gewählt werden. In der Figur ist eine der eingangs erwähnten Schraubenlinien 20, entlang welcher graviert wird, über dem virtuellen Raster 15 eingetragen. Die Neigung der Schraubenlinie 20 gegenüber der Umfangsrichtung 10 ist sehr klein, und zwar entspricht der Tangens des Steigungswinkels der Schraubenlinie 20 dem Quotienten aus dem Vorschub s geteilt durch den Umfang des Siebzylinders h (580 bis 1000 mm). Der Vorschub s wird größenordnungsmäßig gleich der Breite der Gravurlinie gewählt werden und diese wiederum entspricht dem Durchmesser des Laserstrahls im Fokuspunkt (etwa 70 bis 100 μm). Wenn weiter oben erwähnt wurde, daß der Winkel 18 beliebig gewählt werden kann, so bedarf dies einer geringfügigen Einschränkung. Die Neigung des Rasters muß, wenn auch in einem sehr geringen Ausmaß, korrigiert werden. Es muß beachtet werden, daß an jener Stelle des Umfangs des Siebzylinders, an welcher später im Gravurbild die Ränder des Additionsbildes 14 zusammenstoßen werden, eine Fehlstelle in Form einer dunklen oder hellen Linie für einen Betrachter dann sichtbar wird, wenn der Raster nicht paßt, d. h. wenn dieser an der Stoßstelle nicht punktgenau ineinander überführt wird.

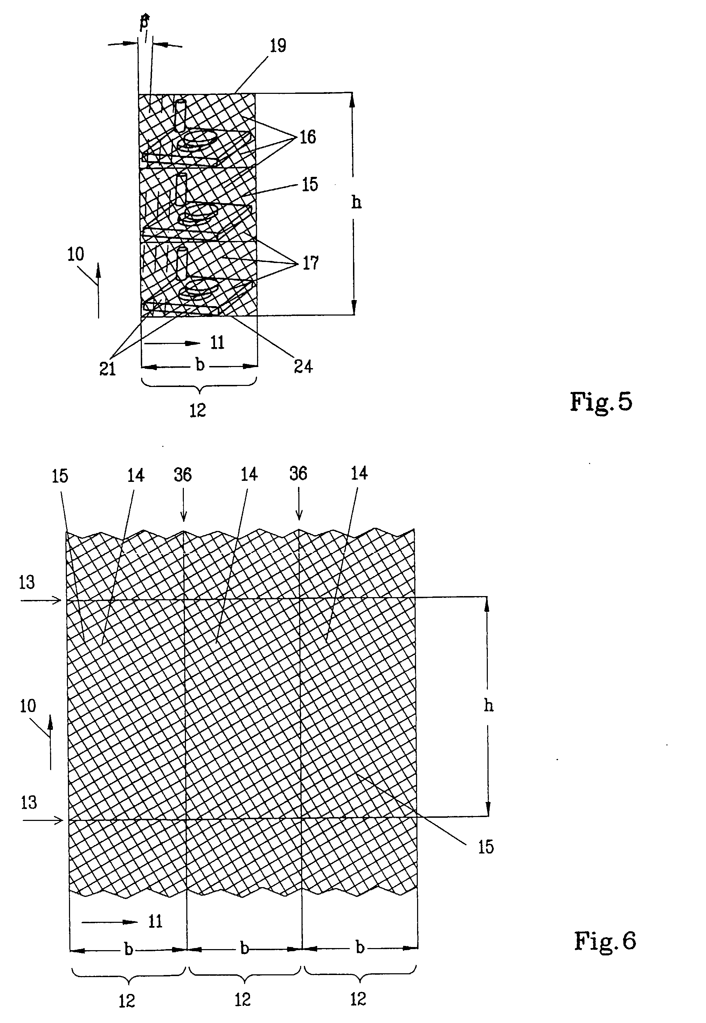

Die Figur 5 zeigt das bei der Gravur entstehende Muster, welches mit dem virtuellen Raster 15 überlagert ist. Da die ursprünglich zu dem Bildrand parallelen Bereiche des Musters entsprechend der durch die Schraubenlinien 20 gegenüber der Umfangsrichtung 10 bedingten Neigung hier schräg aufgetragen werden, ist das Muster auf der Siebzylinderoberfläche geringfügig verzerrt. Bei einem Ausführungsbeispiel beträgt dieser Verzerrungswinkel:

$$\beta = 0.1/(580 \text{ bis } 1000) = 0.00002 \text{ bis } 0.00001 \text{ rad}$$

Dies ist ein guter Mittelwert für übliche Verzerrungen. So kleine Verzerrungen sind für viele drucktechnische Zwecke unerheblich. Die Darstellung der Verzerrung in der Figur 5 ist zum Zweck der Verdeutlichung des Sachverhalts stark übertrieben. Wesentlich ist aber, daß nur die Verzerrung des Bildinhalts von untergeordneter Bedeutung ist, nicht aber Fehler, die durch eine völlig willkürliche Lage der Netzlinien 16 und 17 des für die Zwecke der Halbtongenerierung unterlegten, virtuellen Rasters 15 an den Stellen im Gravurbild entstehen können, an welchen die Bildränder des Additionsbildes 14 zusammenstoßen. Bei der Gravur zylindrischer Siebzylinder muß das mit Rasterinformationen versehene Additionsbild einmal über den Umfang h des zu gravierenden Siebzylinders aufgetragen werden. An den Stellen, wo der untere Gravurbildrand 24 mit dem oberen Gravurbildrand 19 zusammenstößt, würden dann auf dem Siebzylinder willkürlich durch die Bildränder angeschnittene Rasterzellen 21 aufeinandertreffen, wodurch im Duckbild sichtbare Gravurfehler auftreten würden. Wenn also früher die Forderung aufgestellt wurde, daß die Netzlinien 16 und 17 des Rasters 15 mit beliebig wählbaren Winkel 18 gegenüber den Bildrändern angeordnet werden können, bedarf diese Forderung jetzt einer gewissen Einschränkung. Verschiebt man den Raster um den Umfang h des Siebzylinders, so muß der Raster an der sich hierdurch ergebenden Anschlußstelle fehlerfrei gefügt sein. Die soeben aufgestellte Forderung kann aber stets und praktisch fast ohne Einschränkung in der freien Wahl des Winkels erfüllt werden, wenn man eine ganz geringfügige Drehung und eine ebensolche Dehnung oder Stauchung des Rasters zuläßt.

In der Figur 6 ist ein Raster 15 dargestellt, der an der Stoßstelle 13 des unteren Bildrands 24 mit dem oberen Bildrand 19 nicht zusammenpaßt. Es genügt eine sehr geringfügige Verzerrung (= Dehnung + Dehnung oder Stauchung) des Rasters, um diese Fehler zu vermeiden. An den Stoßstellen 36 in Längsrichtung 11 wird der Raster 15 bei der "on fly"-Rasterungsmethode kontinuierlich weitergezogen, so daß ein Rasterungsfehler hier gar nicht auftritt. Dies heißt, daß der Raster 15 nicht die Bildbreite b des Additionsbildes 14 als Längsrapport aufweist, sondern daß sein Längsrapport vollkommen unabhängig von dieser Breite b ist.

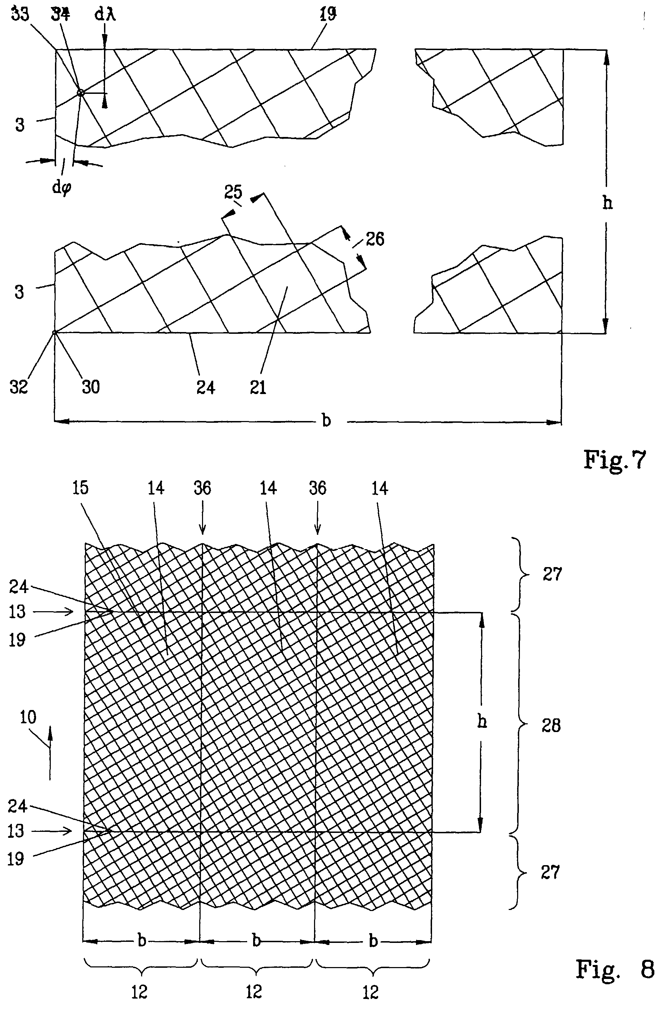

Wie man die für die Behebung der Rasterungsfehler in Umfangsrichtung 10 notwendige Verzerrung (Dehnung + Drehung) erhält, wird anhand der Figur 7 beschrieben. Bei diesem Verfahren werden die Fehler an der Stoßstelle zwischen unterem und oberem Bildrand korrigiert. Die Verzerrung des Rasters braucht bezogen auf den Umfang h des Siebzylinders und die Breite b des Additionsbildes 14 (= Längsrapport) jedenfalls nicht größer zu sein als die Abmessungen 25 und 26 einer Rasterzelle 21. Die Figur 7 stellt Bildausschnitte nahe dem oberen Bildrand 19 und dem unteren Bildrand 24 des Additionsbildes 14 dar. Der Raster wurde hier so angeordnet, daß ein Gitternetzpunkt 30 mit dem linken unteren Eckpunkt 32 des Additionsbildes 14 zusammenfällt. Man sucht nahe dem linken oberen Endpunkt 33 des Additionsbildes 14 einen anderen benachbarten Gitternetzpunkt 34 auf. Die Richtung der Verbindung vom Eckpunkt 32 zum Gitternetzpunkt 34 schließt mit dem linken Rand 3 des Additionsbildes 14 einen Winkel dφ ein. Verschwenkt man den Raster um den Winkel dφ, so kommt dieser Gitternetzpunkt 34 genau auf dem Rand 3 zu liegen. Im allgemeinen wird der Gitternetzpunkt 34 dann noch nicht mit dem Eckpunkt 33 zusammenfallen, sondern ein Abstand dλ zu diesem aufweisen. Dahervergrößert oder verkleinert man den Raster jetzt so lange, bis der Gitternetzpunkt 34 mit dem Eckpunkt 33 zusammenfällt. Aus diesem Vorgang ergibt sich der kleine Korrekturdrehwinkel dφ und ein sehr nahe bei dem Wert 1 liegender Korrektur-Zoomfaktor für den Raster. Der Korrektur-Zoomfaktor beträgt:

$$Zf = h / (h - d\lambda)$$

Hierin ist $d\lambda$ positiv zu setzen, wenn der Gitternetzpunkt 34 nach der Drehung des Rasters zwischen den Eckpunkten 32 und 33 liegt. Befindet sich der ausgewählte Gitternetzpunkt außerhalb dieser Strecke, dann ist $d\lambda$ negativ zu wählen. Wendet man diese Verzerrungskorrektur, die sich aus der Drehung $d\varphi$ und der Vergrößerung zusammensetzt, auf den gesamten Raster 15 an, so wird die Forderung des fehlerfreien Passens des Rasters am oberen und unteren Bildrand erfüllt, wenn diese zusammenstoßen.

Dieser Sachverhalt ist in der Figur 8 verdeutlicht. Die Bereiche 27 am unteren und oberen Bildrand sind eigentlich eine Wiederholung des inneren Bereichs 28 dieser Darstellung, sie sind nur deshalb in der Abwicklungsdarstellung der realen, zylindrischen Oberfläche des Siebzylinders eingetragen, um das Passen des Rasters zu demonstrieren. Man entnimmt dieser Darstellung auch die unterschiedliche Lage s Rasters in den unteren Eckpunkten der Stoßstellen 36, welche sich aus dem wiederholenden Aneinanderfügen des Additionsbildes 14 in Längsrichtung 11 ergibt. An den Stoßstellen 36 wird ein einwandfreies Passen des Rasters bei zugleich identischer Lage des Rasters an allen Stoßstellen 36 dann erreicht werden, wenn die Verzerrung des Rasters, die bisher aus einer sehr kleinen Drehung und einem Zoom bestanden hat, durch eine vollständige affine Verzerrung dieses virtuellen Rasters 15 ersetzt wird. Dadurch läßt sich das gesamte Muster einschließlich der Rasterinformationen in einer additionsfähigen Weise aufbereiten, kann dann in einem Speicher entsprechender Größe abgelegt werden und schließlich von dort ohne weitere rechentechnische Maßnahmen zur Aufrasterung während der Gravur verwendet werden, wobei bei jeder neuen Längsaddition der ursprünglich zur Aufbereitung verwendete Umfangsversatz angewendet werden muß. Dieses Rasteraufbereitungsverfahren soll als affines Vorrasterverfahren bezeichnet werden.

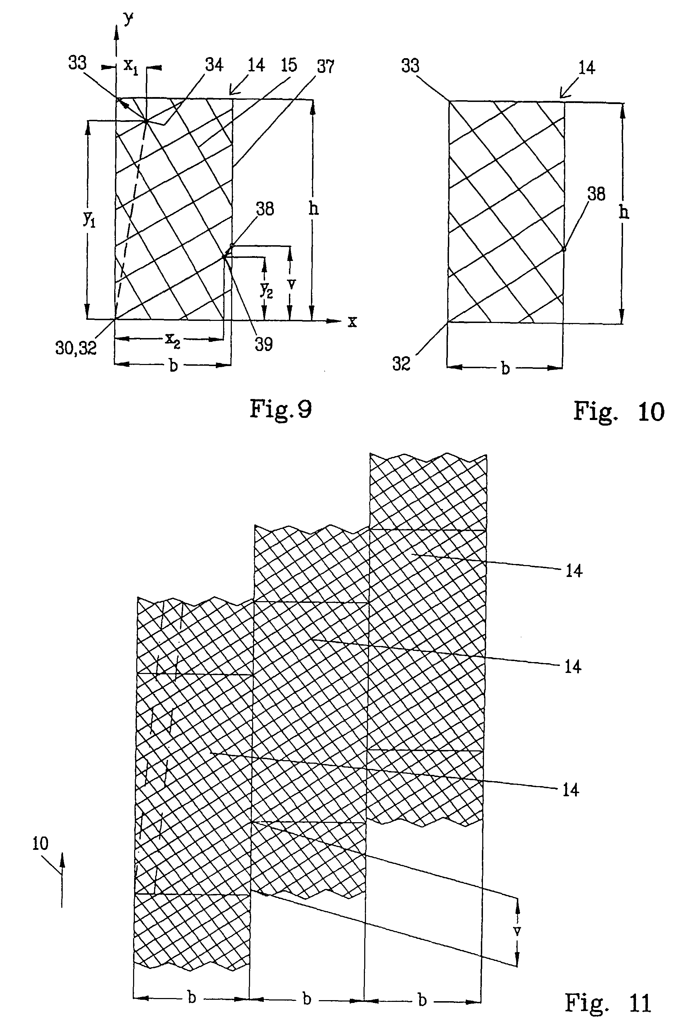

Wie die affines Verzerrung durchgeführt wird, ist anhand der Figur 9 beschrieben. Der Raster 15 ist auch hier wiederum so verschoben, daß ein Gitternetzpunkt 30 mit dem linken unteren Eckpunkt 32 des Additionsbildes 14 zusammenfällt. Der Eckpunkt 33 liegt links am oberen Rand. Am nächsten zu diesem Eckpunkt 33 liegt der Gitternetzpunkt 34. Nach dem bisher Gesagten ist bereits klar, daß der Raster 15 so verzerrt werden muß, daß der Gitternetzpunkt 34 mit dem Eckpunkt 33 zusammenfällt. Zusätzlich soll jetzt der Raster bei dem Anfügen des gleichen Bildausschnitts am rechten Rand 37 ebenfalls passen. Dies erfordert, daß der am rechten Rand 37 liegende Rapportanschlußpunkt 38, der um die Strecke v in Umfangsrichtung versetzt ist, ebenso wie der Anfangspunkt 32 ein Gitternetzpunkt ist. Am nächsten liegt hier der Gitternetzpunkt 39. Der Raster muß jetzt zusätzlich so verzerrt werden, daß dieser Gitternetzpunkt 39 mit dem Rapportanschlußpunkt 38 zusammenfällt. Es wird weiterhin verlangt, daß die gesamte Verzerrung linear erfolgt, so daß die einzelnen Rasterpunkte auch nach der Verzerrung zueinander gleichmäßige Abstände aufweisen. Stellt man ein Koordinatensystem so auf, daß der Ursprung desselben mit dem Eckpunkt 32 des Additionsbildes 14 zusammenfällt, die y-Richtung mit dem linken Bildrand 3 zusammenfällt und die x-Richtung mit jener des unteren Bildrands 24, so gilt für die Koordinaten der die Verzerrung festlegenden Bildpunkte folgendes:

Die Koordination der beiden Gitternetzpunkte 34, 39 des unverzerrten Rasters 15 sind:

| | |
|---|---|
| Gitternetzpunkt 34 | $x_1, y_1$ |
| Gitternetzpunkt 39 | $x_2, y_2$ |

Die Koordinaten der Punkte, mit welchen diese beiden Gitternetzpunkte zusammenfallen sollen, sind:

| | |
|---|---|
| Eckpunkt 33 | $0, h$ |
| Rapportanschlußpunkt 38 | $b, v$ |

Eine lineare Koordinatentransformation, die für die Lösung der gestellten Aufgabe geeignet ist, hat das Aussehen:

$$x = a_x \cdot x_p + a_y \cdot y_p$$

$$y = b_x \cdot x_p + b_y \cdot y_p \qquad \text{(TG)}$$

mit den noch unbekannten Transformationskoeffizienten $a_x$, $a_y$, $b_x$, $b_y$.

Wendet man diese Transformationsvorschrift auf die zu transformierenden Punkte an, so erhält man folgende vier Gleichungen:

$$0 = a_x \cdot x_1 + a_y \cdot y_1$$
$$h = b_x \cdot x_1 + b_y \cdot y_1$$
$$b = a_x \cdot x_2 + a_y \cdot y_2 \qquad \text{(AB)}$$
$$v = b_x \cdot x_2 + b_y \cdot y_2$$

Aus diesen letzten vier Gleichungen können die vier unbekannten Koeffizienten $a_x$, $a_y$, $b_x$, $b_y$ ermittelt werden und schließlich mit diesen Koeffizienten die Koordinaten aller übrigen Gitternetzpunkte des transformierten Rasters mit den Beziehungen (TG). Für diese Koeffizienten folgt aus der Auflösung von (AB):

$$a_x = \frac{b \cdot y_1}{x_1 \cdot y_2 - x_2 \cdot y_1}$$

$$a_y = \frac{b \cdot x_1}{x_1 \cdot y_2 - x_2 \cdot y_1}$$

$$b_x = \frac{v \cdot y_1 - h \cdot y_2}{x_1 \cdot (y_1 - y_2)}$$

$$b_y = \frac{h - v}{y_1 - y_2} \qquad \text{(KF)}$$

Bei der Gravur des Siebzylinders liegt die Schraubenlinie 20 in Wirklichkeit im affin verzerrten Raster 15. Da eine Zelle dieses Rasters, wie noch später beschrieben wird, als quadratische Zelle verwendet werden wird, wie dies eigentlich nur dem unverzerrten Raster entsprechen würde, muß die Schraubenlinie 20 oder wenigstens einzelne Punkte derselen durch eine zu (TG) inverse Transformation in die Darstellung des unverzerrten Rasterbildes abgebildet werden. Für diese inverse Transformation gewinnt man aus (TG) durch Auflösung nach $x_p$, $y_p$:

$$x_p = \frac{x \cdot b_y - y \cdot a_y}{a_x \cdot b_y - b_x \cdot a_y}$$

$$y_p = \frac{y \cdot a_x - x \cdot b_x}{a_x \cdot b_y - b_x \cdot a_y} \qquad \text{(IT)}$$

Hierin sind x und y die Koordinaten eines verzerrten Gitternetzpunktes und $x_p$, $y_p$ die Koordinaten eines unverzerrten Gitternetzpunktes. Setzt man für x und y die Koordinaten des realen Endpunktes einer Schraubenlinie 20, so erhält man für $x_p$, $y_p$ die auf einen quadratischen Raster verzerrten Koordinaten dieses Schraubenlinienendpunktes und mit

$$\overline{\alpha} = \arctan\left(\frac{x_P}{y_P}\right) \qquad \text{(W1)}$$

den Winkel dieser verzerrten Schraubenlinie gegenüber einer Netzlinienschar 16, 17, der bei der noch später zu beschreibenden Ermittlung der Halbtonwerte zu berücksichtigen sein wird.

Die Figur 10 zeigt den affin verzerrten Raster innerhalb eines einzigen Additionsbildes 14 und die Figur 11 zeigt das entstehende Rasterbild, wenn man die aufgerasterten Additionsbilder in Längsrichtung des Siebzylinders zusammenfügt, wobei bei jeder Addition der Umfangsversatz v berücksichtigt wird. Der Raster eines Additionsbildes 14 paßt einwandfrei an allen vier Rändern zu dem benachbarten Additionsbild 14.

Bis hierher wurde nur auf das Passen des Rasters an den Stoßstellen der aneinanderzufügenden Bildausschnitte eingegangen. Eine weitere wichtige technische Maßnahme ist aber auch die Bildung jener digitalen Information, welche einerseits die Steuerung der Farbintensität des Druckbildes entsprechend der Grautönung der Mustervorlage 1 ermöglicht und andererseits auch den vom Längsrapport unabhängigen Anschluß des Rasters an das vorhergehende Additionsbild.

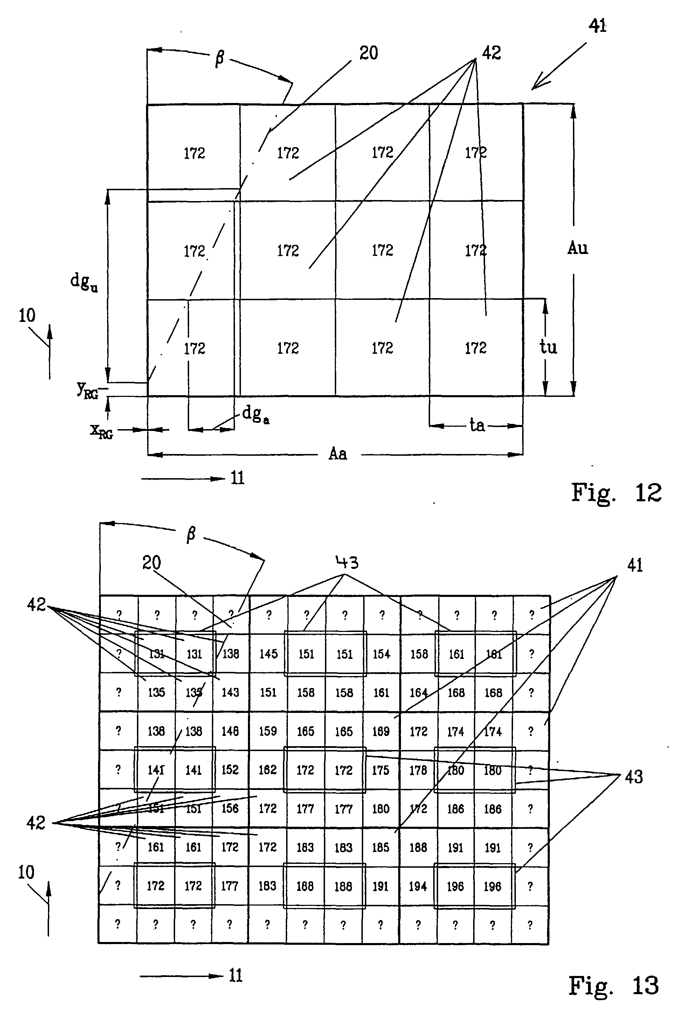

Hierzu wird jede Grautonzelle 8 der Grauwerttabelle 7 der Figur 2 in Feinzellen unterteilt. Dies ist in Figur 12 dargestellt. Es wird eine Umfangs- und eine Längsresolution definiert, die feiner ist, als dies den Abständen Au der Lesepunkte 4 und den Abständen Aa der Leselinien 2, welche der Grauwerttabelle 7 zugrundegelegt wurden, entsprechen würde. Die Abstände Au und Aa können als Abmessungen einer auf den Umfang des Siebzylinders übertragen gedachten Grautonzelle 8 der Grauwerttabelle 7 oder des Additionsbildes 14 verstanden werden. Die zuvor angesprochene Umfangs- und Längsresolution wird nicht völlig willkürlich gewählt, sondern sie hängt von Erfahrungswerten ab, welche der jeweiligen Feinheit der Maschenweite des Siebzylinders entsprechen müssen. Der Anwender kann zwischen einer feinen, mittleren und großen Auflösung wählen. Die nachfolgende Tabelle I enthält typische Werte hierfür:

TABELLE I

| Siebfeinheit der Schablone [Öffngn./Zoll] | Auflösung | Grobraster [Linien / cm] | Horizontale Resolution [Pkt./mm] | Vertikale Resolution [Pkt./mm] | Winkellage [Grad] |
|---|---|---|---|---|---|
| 60 | mittel | 13.5 | 10 | 30 | 15 |
| 80 | mittel | 16.6 | 10 | 30 | 15 |
| 80 | fein | 53.9 | 21 | 50 | 15 |
| 105 | mittel | 20.95 | 15 | 30 | 15 |
| 125 | fein | 27.0 | 13.33 | 30 | 15 |
| 125 | mittel | 22.2 | 8.0 | 30 | 15 |
| 125 | grob | 15.77 | 7.76 | 30 | 15 |
| 135 | grob | 16.6 | 10 | 30 | 30 |
| 155 | fein | 31.8 | 20 | 20 | 30 |
| 155 | mittel | 27.7 | 13.333 | 30 | 30 |
| 155 | grob | 19.5 | 12.3 | 30 | 30 |
| 165 | fein | 36 | 19.1 | 30 | 30 |
| 165 | mittel | 29 | 14 | 30 | 30 |
| 165 | grob | 20.8 | 13.511 | 30 | 30 |
| 185 | fein | 40 | 19.38 | 30 | 30 |
| 185 | grob | 23.34 | 16.9 | 30 | 30 |
| 195 | fein | 39.1 | 19.7 | 30 | 30 |
| 195 | grob | 23.34 | 19.7 | 30 | 30 |

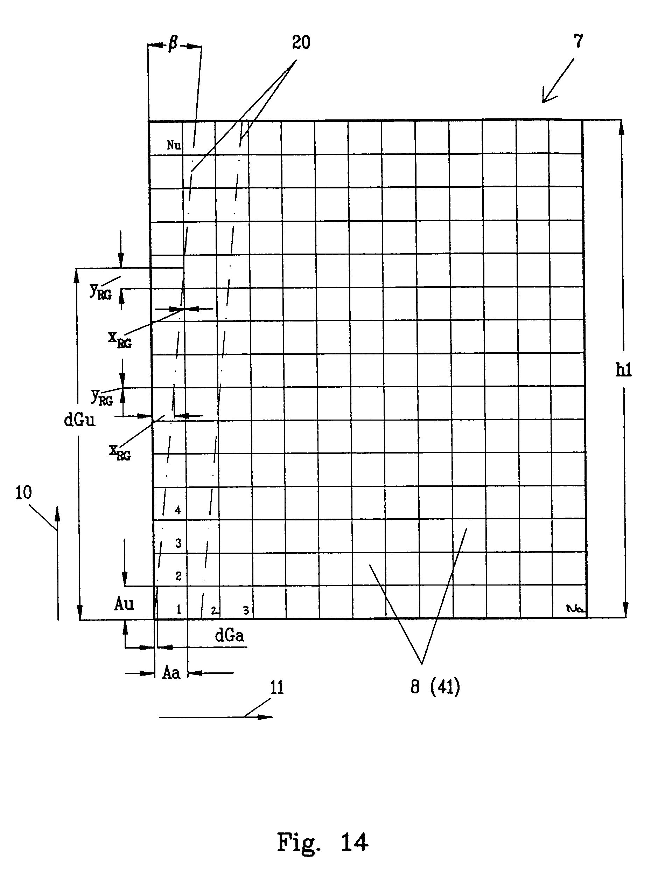

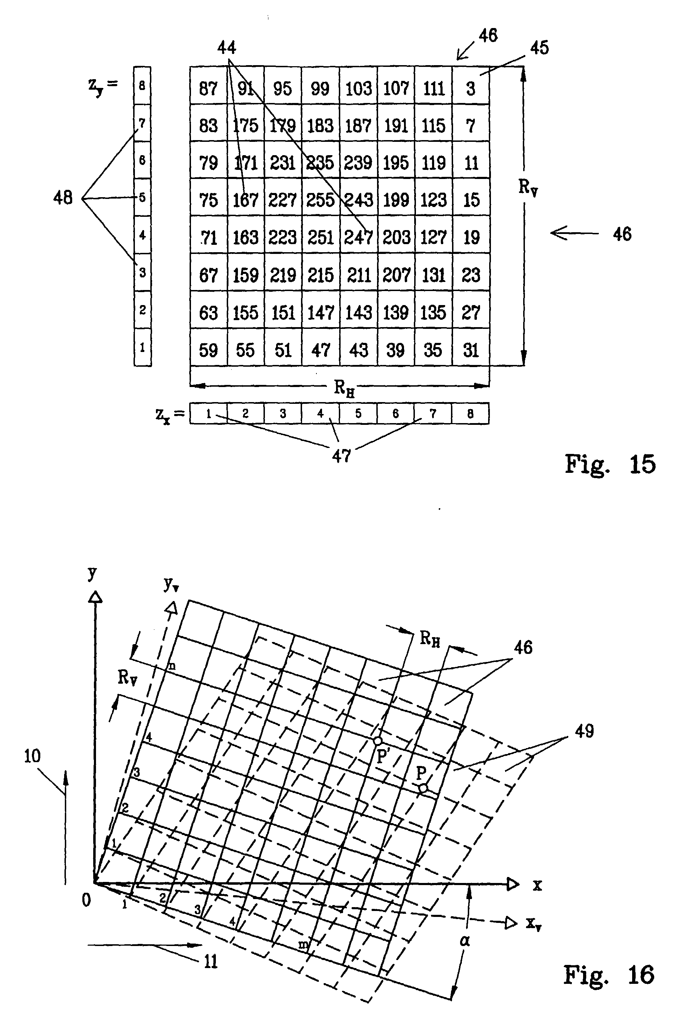

Die der Grautonzelle 8 entsprechende unterteilte Grautonzelle 41 der Figur 12 ist hier aufgrund solcher Tabellenangaben z. B. dreimal in Umfangsrichtung und viermal in Längsrichtung unterteilt. Die Grautonzelle 41 übernimmt die Abmessungen Au und Aa der Grautonzellen 8 der Grauwerttabelle 7. Durch die Unterteilung entstehen die Feinzellen 42 mit den Abmessungen $t_u$ und $t_a$. In jede dieser Feinzellen 42 wird der gleiche Grautonwert eingetragen, der in jener Grautonzelle 8 der Grauwerttabelle 7 enthalten war (Urwert), aus welcher die Grautonzelle 41 hervorgegangen ist. Verglichen werden nun die Grautonwerte in den Feinzellen 42 mit den Referenz-Grautonwerten, die in der Referenzzelle 46 (Figur 15) des virtuellen Rasters 15 eingetragen sind. Auf diese Referenzzelle 46 des virtuellen Rasters 15 wird näher bei der Besprechung der Figuren 14 und 15 eingegangen.

Grundsätzlich könnten die Grautonwerte in den Feinzellen 42 der Grautonzelle 41 auch durch Interpolation gewonnen werden. Dies wird in Figur 13 gezeigt. In diesem Fall würden die Urwerte nur in den Feinzellen 42 eingetragen, welche in den Zentren 43 der Grautonzellen 41 liegen. Die am Rand der Grautonzelle 41 liegenden Feinzellen 42 enthalten Werte, die aus einer Interpolation mit den Werten der angrenzenden Grautonzellen 41 hervorgegangen sind. Da jedoch die Grautonzelle 41 bei der "on fly"-Rasterung erst im Augenblick der Gravur erzeugt wird, sind im Falle einer Interpolation der Grautonwerte entweder erhebliche Prozessorgeschwindigkeiten erforderlich oder es muß die Gravurgeschwindigkeit herbgesetzt werden. Außerdem müssen erhebliche Datenmengen nicht nur für die gerade zu gravierende Umfangsreihe sondern auch für die benachbarten Umfangsreihen im RAM des Steuerrechners bereitgehalten werden. In diesem Fall ist es daher vorteilhaft, mit der affinen Vorrasterung zur arbeiten.

In den Figuren 12, 13 und 14 ist eine Schraubenlinie 20 unter dem bereits bekannten Neigungswinkel β gegenüber der Umfangsrichtung 10 eingezeichnet. Die Ermittlung dieses Neigungswinkel wurde im Zusammenhang mit Figur 5 besprochen. Vier für die Entwicklung des Aufrasterungsverfahrens wesentliche Sprungwerte sind aus den Figuren zu entnehmen, nämlich $dG_u$, $dG_a$, $dg_u$ und $dg_a$. Für diese Werte gilt:

$$dG_u = \frac{Aa}{\tan(\beta)}$$

$$dG_a = Au \cdot \tan(\beta)$$

$$dg_u = \frac{t_a}{\tan(\beta)}$$

$$dg_a = t_u \cdot \tan(\beta) \qquad \text{(SW)}$$

In Figur 14 wird die Durchführung des Aufrasterungsverfahrens gezeigt. Es wird hier die Grauwerttabelle 7 mit ihren Grautonzellen 8 bzw. 41 dargestellt. Die Abmessung der Grauwerttabelle 7 in Umfangsrichtung ist h 1. Man legt eine erste Schraubenlinie 20 mit ihrem Anfangspunkt in das linke untere Eck der ersten Zelle des ersten Additions bildes 14 oder, was hiermit identisch ist, in das linke untere Eck der ersten Zelle der Grauwerttabelle 7 (Figur 2). In der Grauwerttabelle 7 gibt es Nu = h1/Au Zellen in Umfangsrichtung und Na = b/Aa Zellen in Achsrichtung. Immer dann, wenn die Schraubenlinie 20 die Umrandung einer Grautonzelle 8 der Grauwerttabelle 7 neu anschneidet, werden die Feinzellen 42 der Grautonzelle 41 mit neuen Werten, und zwar mit j enen, welche dem Grautonwert in der neu angeschnittenen Zelle 8 entsprechen, aufgefüllt. Außerdem werden die genauen Abstände des Anschnittpunktes $x_{RG}$ bzw. $y_{RG}$ vom linken unteren Eckpunkt einer Zelle 8 und hiermit identisch der Grautonzelle 41 berechnet. Es ist notwendig, die beim Durchlaufen einer Schraubenlinie 20 vom Anfangs- zum Endpunkt die jeweils aufeinanderfolgend angeschnittenen Zellen 8 und die Koordinaten $x_{RG}$, $y_{RG}$ ihrer Anschnittpunkte festzustellen. Die Berechnung dieser Koordinaten wird später anhand eines eigenen Flußdiagramms besprochen. Die Anschnittkoordinaten $x_{RG}$, $y_{RG}$ werden in die Grautonzelle 41 (Figur 12) übertragen, um dort die angeschnittenen Feinzellen 42 und die Koordinaten ihrer Anschnittpunkte durch die Schraubenlinie 20 ebenfalls feststellen zu können. Diese Anschnittkoordinaten der Feinzellen 42 haben die Koordinaten $x_a$ und $y_a$ für den Anfangspunkt, an welchem die Schraubenlinie 20 in eine Feinzelle 42 eintritt, sowie die Koordinaten $x_e$ und $y_e$ für den Endpunkt, an welchen die Schraubenlinie 20 die Feinzelle 42 wieder verläßt. Die Koordinaten $x_z$ und $y_z$ eines mittleren Punktes des durch eine Feinzelle begrenzten Schraubenlinienabschnitts werden für den weiteren Rechnungsgang benötigt. Sie ergeben sich als Mittelwert der Koordinaten für den Eintritts- und Austrittspunkt.

$$x_z = \frac{x_a + x_e}{2} + x_{RG}$$

$$y_z = \frac{y_a + y_e}{2} + y_{RG} \qquad \text{(MK)}$$

Für diese zuletzt genannten Koordinaten wird der Grautonwert aus der aktuellen Feinzelle 42 behoben und für Vergleichzwecke vorgemerkt.

In Figur 15 wird die für diesen Vergleich erforderliche und bereits mehrfach angesprochene Referenzzelle 46 des virtuellen Rasters 15 dargestellt. Innerhalb dieser Referenzzelle 46 sind bei diesem Ausführungsbeispiel 8 mal 8 = 64 Einzelzellen 44 vorgesehen, welche Grautonwerte von 3 bis 255 enthalten. Die Grautonwerte beginnen in einer äußeren Eckzelle 45 der Referenzzelle 46 mit ihrem niedrigsten Wert und laufen spiralförmig ins Zentrum der Referenzzelle 46. Bei diesem Ausführungsbeispiel steigen sie dabei monoton von Einzelzelle 44 zu Einzelzelle 44 hier jeweils um einen Wert von 4. Im allgemeinen Fall enthält die Referenzzelle 46 des virtuellen Rasters 15 Ngrr mal Ngrr Einzelzellen. Z. B. kann die Referenzzelle 46 auch aus 80 mal 80 = 6400 Einzelzellen bestehen. Es ist aber zweckmäßig, Grautönen Werte zuzuordnen, die nicht mehr als ein byte Speicherplatz erfordern, also Werte zwischen 0 und 255. Im Falle von 6400 Einzelzellen müssen dann immer mehrere (etwa 25) aufeinanderfolgende Zellen den gleichen Wert beinhalten und außerdem springt dieser bei einer Veränderung dann jeweils nur um 1. Eine Schraubenlinie 20 trifft bei dem Durchsetzen der Referenzzelle 46 auf mehrere Einzelzellen 44 im Inneren der Referenzzelle 46. Es werden aber nicht unbedingt alle Einzelzellen 44 wertmäßig ausgelesen, sondern es werden immer nur jene Werte behoben, die an den Koordinaten $x_z$ und $y_z$ der aktuellen Feinzelle 42 benötigt werden. Die Referenzzelle 46 des virtuellen Rasters läßt sich auch als Tabelle verstehen, bei welcher die Werte von zwei Positionszahlen, der horizontalen Positionszahl 47 (= $z_x$) und der vertikalen Positionszahl 48 (= zy) abhängen. Bei der Zuordnung der Koordinaten $x_z$ und $y_z$ muß die Drehung und die affine Verzerrung des Rasters berücksichtigt werden. Ist der in der Feinzelle 42 enthaltene Grautonwert größer als jener der Einzelzelle 44, dann wird dem Laser der Befehl zum Einschalten des Strahls erteilt. Der Laserstrahl bleibt so lange eingeschaltet, bis der Grautonwert in einer Feinzelle 42 kleiner ist als der entsprechende Wert in einer Einzelzelle 44. Ist dies der Fall, dann wird der Laserstrahl ausgeschaltet.

Die Zuordnung der Koordinaten $x_z$ und $y_z$ zu den Positionszahlen $z_x$ und $z_y$ wird anhand der Figur 16 gezeigt. Eine Vielzahl unverzerrter Referenzzellen 46 ist hier in einem Koordinatensystem dargestellt, dessen y-Achse in die Umfangsrichtung und dessen x-Achse in die Achsrichtung eines Siebzylinders weisen. Diese unverzerrte Darstellung entspricht aber nicht der wirklichen Gestalt der Netzelemente des Rasters auf der Oberfläche des Siebzylinders, sondern die Gestalt der Netzelemente, welche diesen Referenzzellen 46 entsprechen, ist affin verzerrt. Dies ist durch die verzerrten Referenzzellen 49 dargestellt. Nur in dieser verzerrten Form schließt der Raster fehlerfrei in Umfangsrichtung mit seinen oberen und unteren Rändern und in Längsrichtung an den nächsten Längsrapport an. Ein Punkt P' innerhalb der unverzerrten Referenzzellen 46 erhält nach seiner Transformation in die verzerrten Referenzzellen 49 eine Lage P, welche durch die früher abgeleiteten Beziehungen (TG) berechnet werden kann. Haben die unverzerrten Referenzzellen 46 die Abmessungen $R_H$ und $R_V$ dann gilt für die Koordinaten des Punktes P':

$$\begin{aligned} x_{P'} &= n \cdot R_V \cdot \sin(\alpha) + m \cdot R_H \cdot \cos(\alpha) \\ y_{P'} &= n \cdot R_V \cdot \cos(\alpha) - m \cdot R_H \cdot \sin(\alpha) \end{aligned} \qquad \text{(PU)}$$

Mit den Gleichungen (TG) folgt für die Koordinaten des verzerrten Punktes P auf der realen Siebzylinderoberfläche:

$$\begin{aligned} x_{PV} &= n \cdot R_V \cdot K_{xv} + m \cdot R_H \cdot K_{xh} \\ y_{PV} &= n \cdot R_V \cdot K_{yv} + m \cdot R_H \cdot K_{yh} \end{aligned} \qquad \text{(PV)}$$

Wobei für die Gesamt-Transformations-Koeffizienten gilt:

$$\begin{aligned} K_{xv} &= \sin(\alpha) \cdot a_x + \cos(\alpha) \cdot a_y \\ K_{xh} &= \cos(\alpha) \cdot a_x - \sin(\alpha) \cdot a_y \\ K_{yv} &= \sin(\alpha) \cdot b_x + \cos(\alpha) \cdot b_y \\ K_{yh} &= \cos(\alpha) \cdot b_x - \sin(\alpha) \cdot b_y \end{aligned} \qquad \text{(Ko1)}$$

In den Gleichungen (PV) müssen n und m nicht ganzzahlige Werte sein; n und m sind nur dann ganzzahlig, wenn der Punkt mit den Koordinaten x und y in einem Netzlinienschnittpunkt liegt. Bei beliebigen Koordinaten, wie zum Beispiel bei den Koordinaten $x_z$ und $y_z$ innerhalb einer aus vier Netzlinien gebildeten Referenzzelle, entsprechen n und m Dezimalbruchwerten, wobei die nach dem Komma liegenden Stellen den Ort innerhalb einer Referenzzelle genauer angeben. Löst man (PV) nach n und m auf, so erhält man:

$$\begin{aligned} n &= \frac{x \cdot K_{yh} - y \cdot K_{xh}}{R_V \cdot \left( K_{xv} \cdot K_{yh} - K_{yv} \cdot K_{xh} \right)} \\ m &= \frac{-x \cdot K_{yv} + y \cdot K_{xv}}{R_H \cdot \left( K_{xv} \cdot K_{yh} - K_{yv} \cdot K_{xh} \right)} \end{aligned} \qquad \text{(L01)}$$

Für einige der in Flußdiagrammen dargestellten Prorammteile insbesondere für das Unterprogramm GTAB ist es erforderlich, die geometrischen Verhältnisse bei der Herstellung eines Additionsbildes 14 genauer zu betrachten.

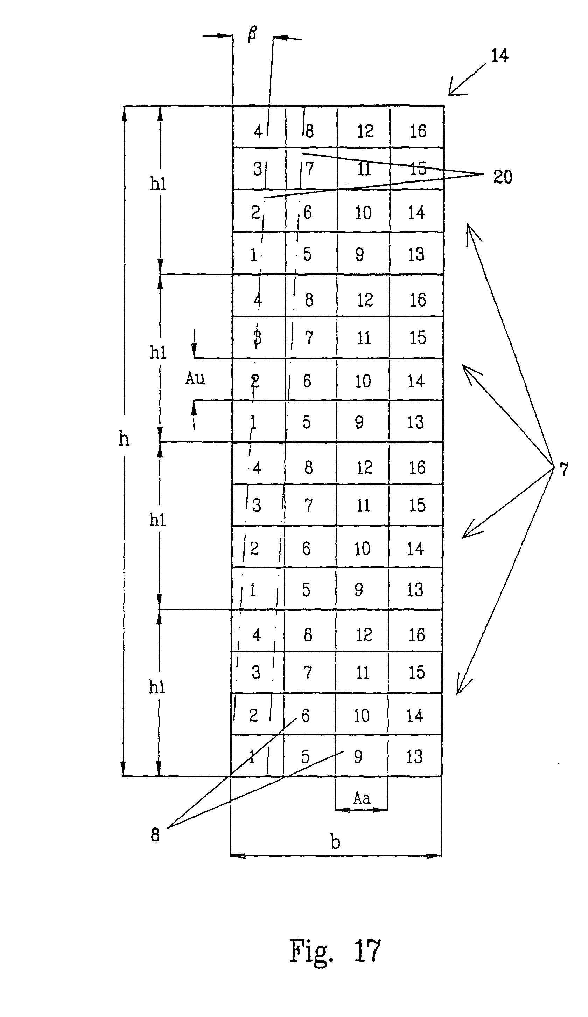

In Figur 17 wird das Additionsbild 14 symbolisch durch eine mehrfache Addition der Grauwerttabelle 7 gebildet. Die Grauwerttabelle 7 enthält in diesem Beispiel Nu = 4 Zellen 8 in Umfangsrichtung, ebensoviele in Längsrichtung. Das Additionsbild wird durch Numf = 4 Additionen in Umfangsrichtung der stets gleichen Grauwerttabelle 7 gebildet. Die Parameter Aa, Au, Sa, Su sind in der Abbildung eingetragen und zeigen auf diese Weise, welchen Abmessungen denselben entsprechen.

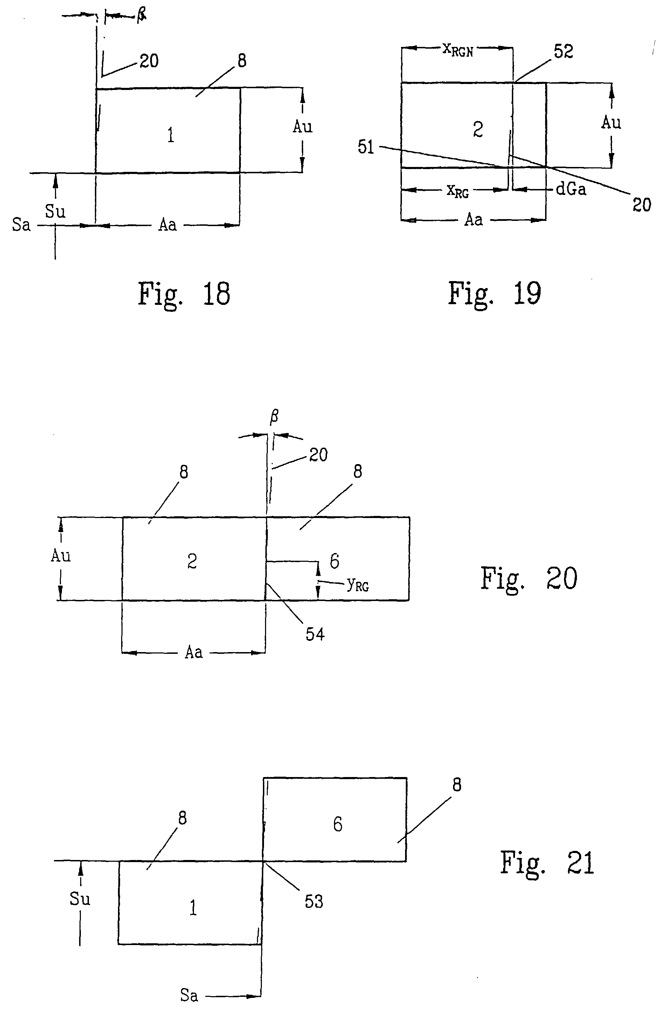

Die Figuren 18 bis 21 zeigen einige wichtige Sonderfälle der Anschnittbedingungen der Zellen 8 bzw. 41 durch die Schraubenlinie 20, die für das Verständnis der später zu beschreibenden Rechenroutinen wichtig sind. Diese letzten Abbildungen sind im wesentlichen der Figur 17 entnommen.

Figur 18 stellt jene Zelle 8 dar, welche am Punkt des Startes der Schablonengravur liegt. Natürlich ist dies auch die erste Zelle der Grauwerttabelle 7 und trägt daher die laufende Nummer 1. Die Abmessungen Sa und Su sind hier zwar ebenfalls eingetragen, doch wird beiden Parametern in diesem besonderen Fall der Wert 0 zugewiesen. Die Schraubenlinie 20 läuft hier genau durch den linken unteren Eckpunkt der Zelle 8. In diesem Fall gilt für $x_{RG}$ = 0 und ebenso für $y_{RG}$ = 0.

Figur 19 zeigt eine Zelle 8 der Grauwerttabelle 7, in welcher der Eintrittspunkt 51 der Schraubenlinie 20 um den Wert $x_{RG}$ abgerückt ist. Durchsetzt die Schraubenlinie 20 die Höhe Au der Zelle 8, dann liegt der Austrittspunkt 52 der Schraubenlinie um den Betrag dGa weiter rechts, die Austrittskoordinate $x_{RGN}$ ist um gerade diesen Betrag größer als die Eintrittskoordinate $x_{RG}$. Dies ist der häufigste und allgemeine Fall des Durchlaufs einer Schraubenlinie durch eine Zelle 8. Der Betrag von $y_{RG}$ ist in diesen Fällen gleich null und die entsprechende Abmessung ist deshalb in dieser Figur nicht eingezeichnet.

In Figur 20 ist der Sonderfall gezeigt, bei welchem die Schraubenlinie 20 die Zelle 8 mit der laufenden Nummer 2 dadurch verläßt, daß sie den rechten, vertikal gezeichneten Seitenrand 54 durchschneidet und daher am linken Seitenrand 54 der benachbarten Zelle 8 mit der laufenden Nummer 5 in letztere eintritt. In diesem Fall ist $y_{RG}$ von null verscheiden, aber natürlich ist hier $x_{RG}$ gleich null.

In Figur 21 ist schließlich der letzte Sonderfall dargestellt, bei welchem die Schraubenlinie 20 eine Zelle 8 genau im oberen rechten Eckpunkt 53 verläßt, der sich mit dem linken unteren Eckpunkt jener Zelle 8 deckt, in welche die Schraubenlinie 20 eintritt.

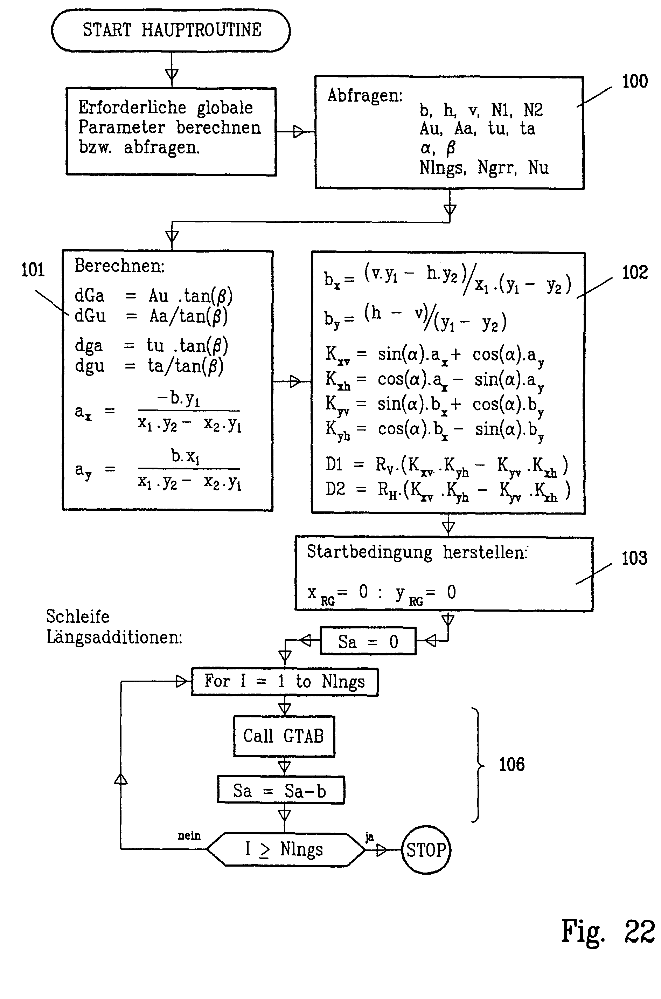

Mit diesen Ergebnissen lassen sich nun die bei derAufrasterung einzuhaltenden Verfahrensschritte durch die Flußdiagramme der Figuren 22 bis 25 beschreiben.

Bevor im einzelnen auf die Routinen der Flußdiagramme eingegangen wird, soll eine tabellarische Übersicht über die verwendeten Parameter gegeben werden:

Hauptroutine:

| Parameter: | Bedeutung: |
| --- | --- |
| b | Breite des Additionsbildes |
| h | Höhe des Additionsbildes |
| hl | Höhe der Grauwerttabelle |
| v | Versatzstrecke in Umfangsrichtung |
| Au | Abmessung einer Grautonzelle 8 der Grauwerttabelle 7 in Umfangsrichtung |
| Aa | Abmessung einer Grautonzelle 8 der Grauwerttabelle 7 in Achsrichtung |
| $\bar{\alpha}$ | Winkel einer in den affin verzerrten Raster transformierten Schraubenlinie |
| $\alpha$ | Wunschdrehlage des Rasters gegenüber Achs- bzw. Umfangsrichtung |
| $\beta$ | Winkel der Schraubenlinie gegenüber der Umfangsrichtung |
| Nlngs | Zahl der Längsadditionen des Additionsbildes für eine ganze Schablone; entspricht der Zahl der Aufrufe der Routine GTAB (..). |
| Nu | Zahl der Speicherzellen 8 der Grauwerttabelle 7 in Richtung des Umfangs der Schablone. |
| Numf | Zahl der Additionen der Grauwerttabelle, die für ein vollständiges Additionsbild notwendig sind. |
| N1 | Zahl der Feinzellen 42 pro Grautonzelle 8 der Grauwerttabelle in Umfangsrichtung |
| N2 | Zahl der Feinzellen 42 pro Grautonzelle 8 der Grauwerttabelle in Achsrichtung |
| tu | Abmessung der Feinzelle in Umfangsrichtung |
| ta | Abmessung der Feinzelle in Achsrichtung |
| $a_x$, $a_y$, $b_x$, $b_y$ $K_{xv}$, $K_{xh}$, | Transformationskoeffizienten |

(fortgesetzt)

| Parameter: | Bedeutung: |
|---|---|
| $K_{yv}$, $K_{yh}$, D1, D2 | Gesamttransformationskoeffizienten<br>Nenner der Bestimmungsgleichungen (LO1) für n, m |
| **Routine GTAB:** | |
| ZNr | Zellennummer einer Speicherzelle der Grauwerttabelle |
| Su | Umfangskoordinate vom Startpunkt der Schablone aus gemessen bis zum linken unteren Eckpunkt der gerade bearbeiteten Zelle 8 (= Grobkoordinate) |
| Sa | Axialkoordinate vom Startpunkt der Schablone aus gemessen bis zum linken unteren Eckpunkt der gerade bearbeiteten Zelle 8 (=Grobkoordinate) |
| $x_{RG}$, $y_{RG}$ | Koordinaten des Eintrittspunktes einer Schraubenlinie in Zelle 8 von deren linken unteren Eckpunkt aus gemessen. |
| $x_{RGN}$ | Koordinate des Austrittspunktes einer Schraubenlinie in Zelle 8 von deren linken unteren Eckpunkt aus gemessen. |
| Liflg | flag, welches anzeigt, daß ein linker Seitenrand einer Zelle von der Schraubenlinie durchschnitten wird. |
| **Routine RGTZ:** | |
| $x_a$, $y_a$ | Koordinaten des Eintrittspunktes der Schraubenlinie in Feinzelle bezüglich deren linken, unteren Eckpunkt (= Anfangspunkt). |
| $x_e$, $y_e$ | Koordinaten des Austrittspunktes der Schraubenlinie aus Feinzelle bezüglich deren linken, unteren Eckpunkt (= Endpunkt). |
| $x_h$, $y_h$ | Hilfskoordinaten, die die Abstände des linken unteren Eckpunktes der aktuellen Feinzelle vom linken unteren Eckpunkt der Grautonzelle 41 beschreiben. |
| $x_z$, $Y_z$ | Koordinaten des Mittelpunktes eines durch eine Feinzelle eingeschlossenen Schraubenlinienabschnittes bezüglich des linken unteren Eckpunktes der Grautonzelle 41 |
| Gtw | Grautonwert = Wert des Grautons in einer Zelle der Grauwerttabelle |
| **Routine GRTV:** | |
| x, y | Koordinaten des Mittelpunktes eines durch eine Feinzelle eingeschlossenen Schraubenlinienabschnittes bezüglich des Startpunktes der Schablone. |
| n, m | transformierte Koordinaten |
| $\Delta n$, $\Delta m$ | Dezimalbruchanteil der transformierten Koordinaten = Koordinaten einer Einzelzelle 44 der Referenzzelle des virtuellen Rasters bezüglich des linken unteren Eckpunktes der Referenzzelle des virtuellen Rasters. |
| $z_x$, $z_y$ | horizontale bzw. vertikale Positionszahl einer Einzelzelle 44 der Referenzzelle des virtuellen Rasters. |

Es zeigt die Figur 22 die zu befolgende Hauptrechenroutine. Zu Beginn werden alle jene Parameter abgefragt (Schritt 100) oder berechnet (Schritt 101, 102), welche während des ganzen Prozesses derAufrasterung eines Siebzylinders aktuell bleiben. Zu achten ist insbesondere darauf, daß Au wirklich ganzzahlig in der Höhe h des Additionsbildes 14 (= Umfang h des Siebzylinders) enthalten ist. Es darf also dieser Wert nicht durch numerisches Runden so verfälscht werden, daß Nu* Au von h verschieden ist. Durch entsprechende Wahl der Rechengenauigkeit (double precision) und eine vernünftige Wahl des Wertes von Nu kann diese Bedingung erfüllt werden. Alle verwendeten Parameter sollen als sogenannte globale Parameter verwendet werden, da. h. daß auf jeden Parameterwert von jedem Programmteil aus zugegriffen werden kann. Die Koordinatenwerte $x_{RG}$, $y_{RG}$ werden im Abschnitt 103 auf Null gesetzt, dies ist notwendig für die vom Programm zuerst bearbeitete, linke, untere Zelle der Grauwerttabelle 7 oder des Additionsbildes 14, welches nur die mehrfache Hintereinanderfügung der Grauwerttabelle 7 darstellt. Innerhalb einer Schleife 106 wird Nlngs - mal das Unterprogramm GTAB aufgerufen. Zuvor wird in dieser Schleife 106 bei jedem neuen Durchlauf der Wert Sa auf Null gesetzt, weil jeder Durchlauf der vollständigen Erzeugung eines Additionsbildes 14 entspricht.

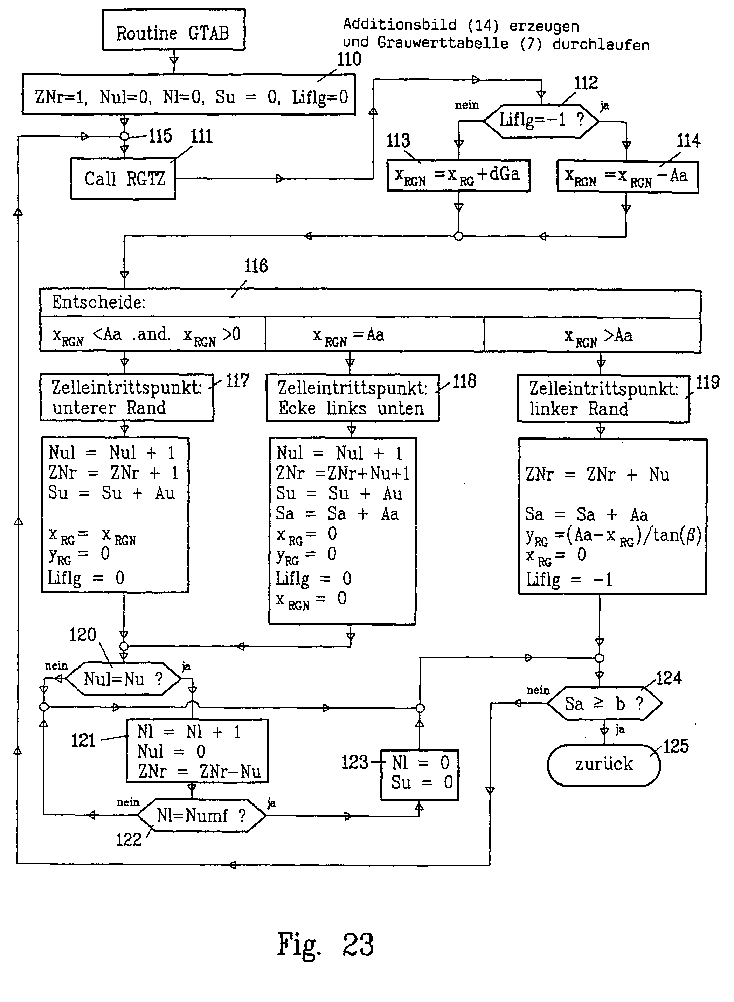

In Figur 23 ist das Unterprogramm GTAB dargestellt; innerhalb dieser Routine wird das Additionsbild erzeugt.

Bei der Erläuterung der mathematisch-geometrischen Zusammenhänge wird auf die Figuren 17 bis 21 zurückgegriffen. Bei dieser Routine findet zumindest ein vollständiger Durchlauf durch die Grauwerttabelle 7 statt. Im allgemeinen aber wird die Grauwerttabelle 7 zur Herstellung eines Additionsbildes Numf-mal durchlaufen. Dies ist identisch mit der Gravur eines vollständigen Längsrapports. Hieran anschließend erfolgt ein Rücksprung in den rufenden Programmteil. Der Kopf der mehrfach zu durchlaufenden Schleife liegt bei 115. Bei 110 werden zunächst die für den Beginn erforderlichen Startbedingungen hergestellt. Zunächst wird die Zellennummer der Grauwerttabelle 7 auf den Wert 1 gesetzt, weil die Gravurarbeit, wie schon erwähnt wurde, in der linken unteren Ecke der ersten Zelle 8 der Grauwerttabelle 7 beginnt. Die Zählparameter Nul und Nl werden auf Null gesetzt und das Flag Liflg wird gelöscht, d. h. gleich Null gesetzt. Unmittelbar danach bei 111 erfolgt der Aufruf der Routine RGTZ, innerhalb welcher die Referenzgrautonzelle sowie deren Feinzellen behandelt werden. Dieser Programmteil wird später beschrieben. Bei 112 wird das Flag Liflg abgefragt. Ist dieses gesetzt, so verzweigt das Programm zu 114, sonst zu 113. Das Flag Liflg zeigt im Grunde an, ob beim letzten Durchlauf durch die vorliegende Programmschleife der linke Rand einer Zelle durchschnitten wurde. Ist dies der Fall gewesen, dann wurde im Zweig 119 beim letzten Programmdurchlauf der Wert $x_{RG}$ mit 0 festgelegt und es wurde das Betreten einer Zelle über deren linken Seitenrand behandelt. Im zweiten Abschnitt wird nun eine Zelle über ihren unteren Rand betreten und dieser Abschnitt muß jetzt bearbeitet werden. $x_{RGN}$ ist jetzt aber um den Betrag Aa zu groß und muß bei 114 entsprechend reduziert werden. Ist das Flag Liflg nicht gesetzt, dann wird eine neue $x_{RGN}$-Koordinate durch einfaches Hinzuaddieren der Größe dGa (siehe etwa Figur 14) zur alten $x_{RG}$-Koordinate gebildet. Das Programm läuft nun in die Entscheidung 116, in der beurteilt wird, welche Größe der Wert $x_{RGN}$ aufweist. Je nachdem ob $x_{RGN}$ zwischen Aa und 0 liegt oder gleich Aa oder größer als Aa ist, verzweigt das Programm nach 117, 118 oder 119.

Entsprechend der Begriffe, die zusammen mit den Figuren 17 bis 21 geprägt wurden, verzweigt das Programm nach 117, wenn die Schraubenlinie beim Austritt aus einer aktuellen Zelle 8 der Grauwerttabelle 7 deren oberen Rand durchsetzt. Dies ist der Fall, wenn die Größe $x_{RGN}$ zwischen 0 und Aa liegt. Die Schraubenlinie hat dann, ohne einen vertikal verlaufenden Seitenrand 54 zu durchschneiden eine Zelle 8 durchlaufen und ist in die nächste, darüberliegende eingetreten. Es wird hierbei ein oberer bzw. unterer Rand zwischen zwei Zellen durchschnitten. In diesem Fall wird Nu1, ein Parameter der den laufenden Zählwert einer Zelle nur in Umfangsrichtung beschreibt, um 1 inkrementiert und ebenso die laufende Zellennummer ZNr in der Grautontabelle. Die Koordinate des Zelleneckpunktes in Umfangsrichtung Su wird um die Höhe einer Zelle Au vermehrt. Die x-Koordinate $x_{RG}$ des Eintrittpunktes der Schraubenlinie in die genannte nächste Zelle wird auf den Wert $x_{RGN}$, das war die x-Koordinate des Austrittspunktes 52 der Schraubenlinie 20 aus der vorhergehenden Zelle 8, gesetzt. Die Koordinaten dieser zuletzt genannten Zelle wurde beim vorhergehenden Schleifendurchgang ermittelt. Der Wert der y-Koordinate $y_{RG}$ des Eintrittspunktes ist in diesem Fall stets gleich 0.

Das Programm verzweigt nach 118, wenn die Schraubenlinie eine Zelle genau in deren rechten oberen Eckpunkt verläßt und daher im linken unteren Eckpunkt der nachfolgenden Zelle eintritt. Es gilt dann $x_{RGN}$ = Aa. Der Wert Nul wird um 1 inkrementiert, die Zellennummer aber um 1 + Nu. Außerdem müssen die jeweils sprungartig ansteigenden Koordinaten Sa in axialer Richtung und Su in Umfangsrichtung um die Breite Aa bzw. die Höhe Au einer Zelle inkrementiert werden. $x_{RG}$ und $y_{RG}$ nehmen beide in diesem Fall den Wert 0 an. Schließlich muß $x_{RGN}$ auf Null gesetzt werden, damit bei der nächsten Addition von dGa bei 113 $x_{RGN}$ nicht größer als Aa wird und das Programm beim nächsten Durchlauf fälschlicherweise nicht nach 119 verzweigt.

In den Zweig 119 läuft das Programm, wenn $x_{RGN}$ > Aa geworden ist. Betrachtet man 113, so erkennt man, daß dies dann geschieht, wenn zu einem Wert von $x_{RG}$, der wenig kleiner als Aa ist, ein so großes dGa addiert wird, daß $x_{RGN}$ anschließend den Wert Aa übersteigt. In diesem Fall durchsetzt die Schraubenlinie zwei benachbarte Zellen an ihren vertikalen Seitenrändern, noch bevor $x_{RGN}$ den beschriebenen Wert annehmen kann. Die Zellennummer ZNr muß genau um Nu vermehrt werden. Eigentlich wird der Schraubenlinienabschnitt, der durch einen unteren und einen oberen Zellenrand aus der Schraubenlinie herausgeschnitten wird, durch den in diesem Fall durchlaufenden vertikalen Seitenrand in zwei Abschnitte zerlegt und diesen Umstand muß die Rechenroutine auch berücksichtigen. Zunächst werden die Größen $x_{RG}$ und $y_{RG}$ für den Austritt der Schraubenlinie 20 aus dem ersten Abschnitt gesetzt. Die Zellennummer ZNr muß um Nu inkrementiert werden, die Größe Sa um Aa. $y_{RG}$ rechnet sich entsprechend den geometrischen Gegebenheiten und $x_{RG}$ ist selbstverständlich gleich 0. Damit für den folgenden Schleifendurchlauf bekannt bleibt, daß dann ein zweiter Abschnitt folgt, bei welchem die Schraubenlinie wieder einen unteren bzw. oberen Zellenrand durchschneidet, wird Liflg gesetzt (= -1).

Beim Austritt aus dem Zweig 117 und 118 folgt die Abfrage 120, welche klärt, ob bereits so viele Zellen bearbeitet wurden, als der Höhe der Grautontabelle 7 entsprechen (Nul >= Nu). Ist dies der Fall, so wird bei 121 der Zählparameter N1 um 1 inkrementiert, weil eine weitere Grauwerttabelle zum Additionsbild hinzugefügt wird. Der Zählparameter Nu1 wird wieder auf 0 gesetzt und die Zellennummer muß um Nu dekrementiert werden. Bei 122 folgt die Abfrage, ob die Zahl der Additionen der Grauwerttabelle 7 der erforderlichen Anzahl Numf für ein vollständiges Additionsbild 14 entspricht. Ist dies der Fall, dann wird bei 123 der Wert N1 auf Null gesetzt und ebenso der Wert der Koordinate Su. Da der Wert von Sa größer oder gleich b sein kann, wenn das Programm über den Zweig 118 gelaufen ist, wird diese Bedingung bei 124 abgefragt. Ist auch die letzte Bedingung erfüllt, dann braucht keine weitere Zelle 8 mehr berücksichtigt zu werden, das Additionsbild ist komplett und das Programm springt entsprechend 125 zur die Routine GTAB aufrufenden Prorammstelle zurück.

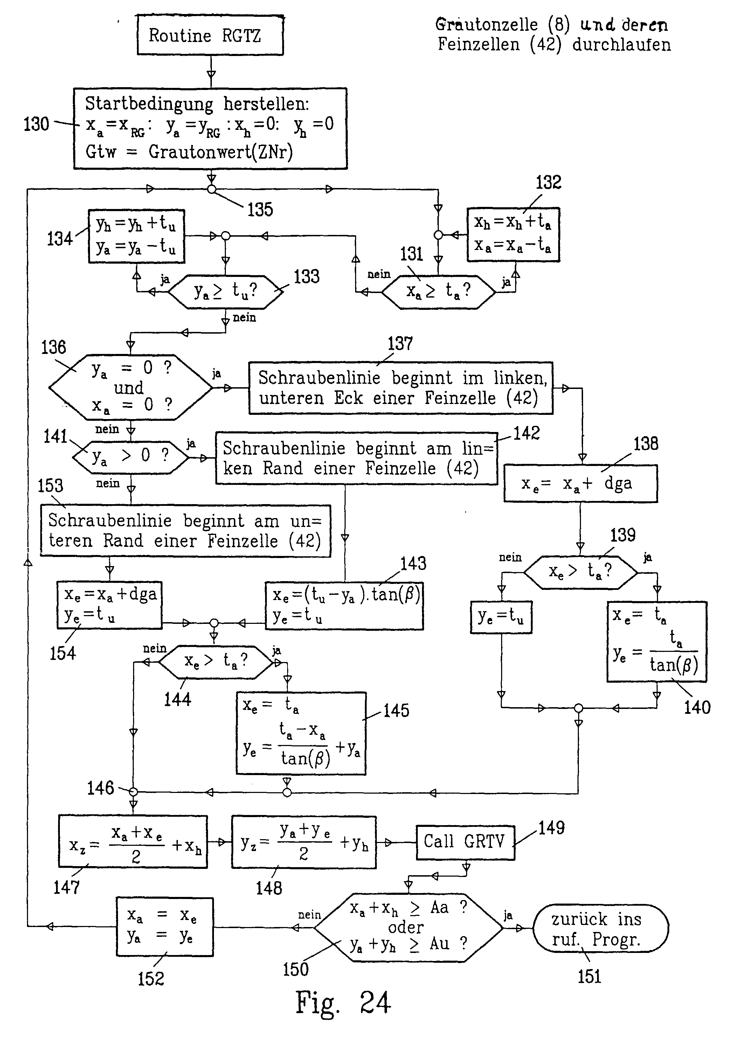

In Figur 24 ist das Unterprogramm RGTZ dargestellt, in welchem eine Zelle 8 nochmals feiner unterteilt wird und auf diese Weise eine Grautonzelle 41 vorzugsweise im Sinne der Figur 12 gebildet wird. Bei der Beschreibung der Programmroutinen wird besonders auf die in dieser Figur dargestellten Verhältnisse zurückgegriffen. In Umfangsrichtung wird eine Zelle N1-mal und in Achsrichtung N2-mal unterteilt. Zum Zweck der Unterteilung einer Zelle 8 wird jeweils der Grautonwert Gtw aus der Grauwerttabelle 7 behoben und den Feinzellen 42 der Referenzgrautonzelle zugewiesen. Im Rahmen dieser Routine wird auch entscheiden, welche der Feinzellen 42 der Referenzgrautonzelle durch die Schraubenlinie 20 angeschnitten wird. Durch diese Unterteilung einer Zelle 8 wird nicht nur die prinzipielle Möglichkeit für eine Interpolation der Grautonwerte innerhalb der Feinzellen 42 der Grautonzelle 41 geschaffen. Es verbleibt als zusätzlicher Vorteil eine erhöhte Rechengenauigkeit, was besonders im Hinblick auf die Vermeidung einer sichtbaren Nahtstelle an der Schließstelle des Additionsbildes am Umfang des Siebzylinders wichtig erscheint. Ein Rechenbeispiel soll dies verdeutlichen. Ein numerisch entstehender Summenfehler resultiert aus der Nu-maligen Addition des Fehlers von Au zur Summe Su (= Umfangskoordinate) vermehrt um den N1-maligen Fehler von tu, obwohl die tatsächliche Unterteilung des Umfanges h der Siebschablone gleich dem Produkt aus Nu und N1 und die Feinteillänge = tu ist.

| Erfindungsgemäßes Verfahren mit Feinzellenunterteilung: | | | |
|---|---|---|---|
| Umfang des Siebzylinders | **h** | | = 1250 mm |
| Abmessung der Grautonzelle | **Au** | | = 0.1 mm |
| Abmessung der Feinzelle | **tu** | | = 0.0333 mm |
| Rechengenauigkeit | | | = 1E-4 (Integer-Genauigkeit); |
| möglicher Fehler pro Addition | | | = 0.1 * 1E-4 mm = 1E-5 mm |
| Zahl der Additionen pro Umfang | Nu | = h/Au | = 12500 |
| Möglicher Summenfehler nach einem Umfang | | | =(12500 + 3)* 1E-5 mm = 0.125 mm = <u>125 μm.</u> |

| Ohne Feinzellenunterteilung: | | | |
|---|---|---|---|
| Umfang des Siebzylinders | **h** | | = 1250 mm |
| Abmessung der Grautonzelle | **Au** | | = 0.0333 mm |
| Rechengenauigkeit | | | = 1E-4 (Integer-Genauigkeit); |
| möglicher Fehler pro Addition | | | = 0.1 * 1E-4 = 1E-5 mm |
| Zahl der Additionen pro Umfang | Nu | = h/Au | = 37500 |
| Möglicher Summenfehler nach einem Umfang | | | = 37500 * 1E-5 mm = 0.375 mm = <u>375 μm.</u> |

Die hier ermittelten Fehler sind für Gravurarbeiten natürlich viel zu groß. Durch Wahl einer höheren Rechengenauigkeit (single precision < 1E-7 oder double precision < 1E-15) können die erforderlichen Genauigkeiten (<= 1 μm) eingestellt werden, der Rechenzeitaufwand wird dadurch allerdings vermehrt.

Wiederum werden bei 130 die für den Start notwendigen Bedingungen herbeigeführt. Die Koordinaten des Eintrittspunktes einer Schraubenlinie 20 in eine Feinzelle 42 werden hier mit $x_a$ und $y_a$ bezeichnet, die des Austrittspunktes mit $x_e$ und $y_e$. Bei Eintritt in die Routine werden die Koordinaten des Eintrittspunktes in eine Feinzelle 42 - der Eintrittspunkt wird hier mit Anfangspunkt, der Austrittspunkt mit Endpunkt bezeichnet - auf die Werte $x_{RG}$ und $y_{RG}$ gesetzt. Ganz ähnlich wie früher sollen die Koordinaten $x_a$ und $y_a$ bzw. $x_e$ und $x_e$ von dem linken unteren Eckpunkt aber jetzt einer Feinzelle 42 aus gemessen werden. Darüber hinaus werden Hilfskoordinaten $x_h$ und $y_h$ beide auf den Wert Null gesetzt. Diese Hilfskoordinaten haben eine den Parametern Sa und Su ähnliche Bedeutung. Sie repräsentieren die Abstände der linken unteren Ecke der aktuellen Feinzelle 42 vom linken unten Eckpunkt der aktuellen Zelle 8. Bei 131 wird nun abgefragt, ob $x_a$ größer als die Teilung $t_a$ einer Feinzelle der Achsrichtung ist. Ist dies der Fall, so wird die Hilfskoordinate $x_h$ bei 132 jeweils um $t_a$ inkrementiert und $x_a$ um denselben Betrag dekrementiert, und zwar solange bis die Abfrage bei 131 über den nein-Ausgang verlassen wird, d. h. daß $x_a < t_a$ geworden ist. Eine gleichartige Behandlung erfahren $y_a$ und $y_h$, jedoch wird hier für den Vergleich die Inkrementierung und die Dekrementierung der Parameter $t_u$ verwendet. Bei 136 wird jetzt abgefragt, ob $x_a$ und $y_a$ beide gleich null sind. Ist dies der Fall, dann kann die Schraubelinie 20 nur im linken Eckpunkt der gerade aktuellen Feinzelle 42 beginnen. Das Programm verzweigt nach 137. Der Wert der x-Koordinate $x_e$ des Austrittspunktes der Schraubenlinie 20 aus der Feinzelle 42 wird zunächst bei 138 durch Hinzufügen des Werts von dga zu $x_a$ bestimmt. Bei sozusagen entarteten Feinzellen kann es aber vorkommen, daß $x_e$ den Wert $t_a$ übersteigt, obgleich dies sehr unwahrscheinlich ist. Es erfolgt daher eine Überprüfung dieses Sachverhaltes bei 139. Wird die Abfrage 139 über den ja-Ausgang verlassen, dann muß, wie man geometrisch leicht einsieht, $x_e$ den Wert $t_a$ annehmen und $y_e$ gleich $t_a/\tan(\beta)$ sein. Wird die Abrage 139 über den ja-Ausgang verlassen, dann nimmt $y_e$ den Wert von $t_u$ an und $x_e$ braucht nicht korrigiert zu werden.

Die weiteren Rechenschritte erfolgen wieder gleichartig wie jene, die nach einem Verlassen der Abfrage 136 über den nein-Ausgang ab der adäquaten Programmstelle durchgeführt werden müssen. Diese sollen aber später behandelt werden. Es wird nochmals die Abfrage 136 betrachtet und angenommen, daß diese nun über den nein-Ausgang verlassen wird. Bei 141 wird abgefragt, ob dieser Fall deshalb eingetreten ist, weil $y_a$ größer als null war. Wird diese Abfrage über den ja-Ausgang verlassen, dann tritt die Schraubenlinie 20 in die gerade aktuelle Feinzelle über deren linken Rand ein und das Programm verzweigt nach 142. Die Koordinaten des Endpunktes $x_e$ und $y_e$ des durch diese Feinzelle 42 herausgeschnittenen Schraubenlinienabschnittes, also die Koordinaten des Austrittspunktes der Schraubenlinie aus der Feinzelle 42 ergeben sich aus geometrischen Gründen entsprechend 143 zu

$$x_e = (t_u - y_a) \cdot \tan(\beta)$$

und

$$Y_e = t_u.$$

Es folgt die Abfrage 144, die sicherstellt, daß $x_e$ nicht größer als $t_a$ ist. Wird die Abfrage 144 über den ja-Ausgang verlassen, dann müssen $x_e$ und $y_e$ entsprechend der Rechenvorschrift 145 korrigiert werden. Bei Beantwortung der Abfrage 144 mit nein kann das Programm ohne eine solche Behandlung von $x_e$ und $y_e$ fortgeführt werden. Bevor aber auf die nachfolgenden Schritte eingegangen wird, die für die für alle aus den Abfragen 136 und 141 hervorgehenden Verzweigungen wiederum gemeinsame Verfahrensschritte sind, muß noch der Fall einer nein-Antwort auf die Abfrage 141 und die Programmverzweigung nach 153 diskutiert werden. In diesem und letzten Fall liegt der Anfangspunkt des durch die aktuelle Feinzelle 42 aus der Schraubenlinie 20 herausgeschnittenen Abschnitts am unteren Rand der Feinzelle 42. $x_e$ und $y_e$ werden zunächst nach der Rechenvorschrift 154 bestimmt, mittels der Abfrage 144 überprüft und ggf. durch die Rechenvorschrift 145 korrigiert. Am Konnektor 146 treffen alle zuletzt diskutierten, unterschiedlichen Programmzweige wieder zusammen. Es folgt nun die Berechnung der Koordinaten $x_z$ und $y_z$ des Mittelpunktes des durch die Feinzelle 42 herausgeschnittenen Abschnitts aus der Schraubenlinie 20. Diese Koordinaten gelten nun wieder in Bezug auf den linken unteren Eckpunkt der aktuellen Zelle 8 und nicht bezüglich der Feinzelle 42. Es ist verständlich, daß diese Koordinaten $x_z$ und $y_z$ als Mittelwerte aus $x_a$ und $x_e$ bzw. $y_a$ und $y_e$ folgen, zu welchen noch die Werte der Hilfskoordinaten $x_h$ und $y_h$ hinzuzuzählen sind. Die Rechenvorschriften 147 und 148 entsprechen diesem Umstand. Bei 149 erfolgt der Aufruf der Routine GRTV, die später beschrieben wird. Nach der Rückkehr von GRTV folgt eine Abfrage 150, um festzustellen, ob die Koordinaten des Endpunktes $x_e + x_h$ und $y_e + y_h$ in Bezug auf den linken unteren Eckpunkt der Zelle 8 die Höhe Au der Zelle 8 der deren Breite Aa erreicht oder überschritten haben. Kann eine der beiden Bedingungen mit ja beantwortet werden, dann ist das ein Zeichen dafür, daß alle durch die Schraubenlinie 20 angeschnittenen Feinzellen 42 der aktuellen Zelle 8 untersucht werden und es erfolgt bei 151 ein Rücksprung ins rufende Programm. Andernfalls werden die Koordinaten des neuen Anfangspunktes auf die Werte des bisherigen Endpunktes gesetzt und das Programm verzweigt mit diesen Werten zum Kopf 135 der zuvor beschriebenen Schleife. Es erfolgt ein neuer Schleifendurchgang.

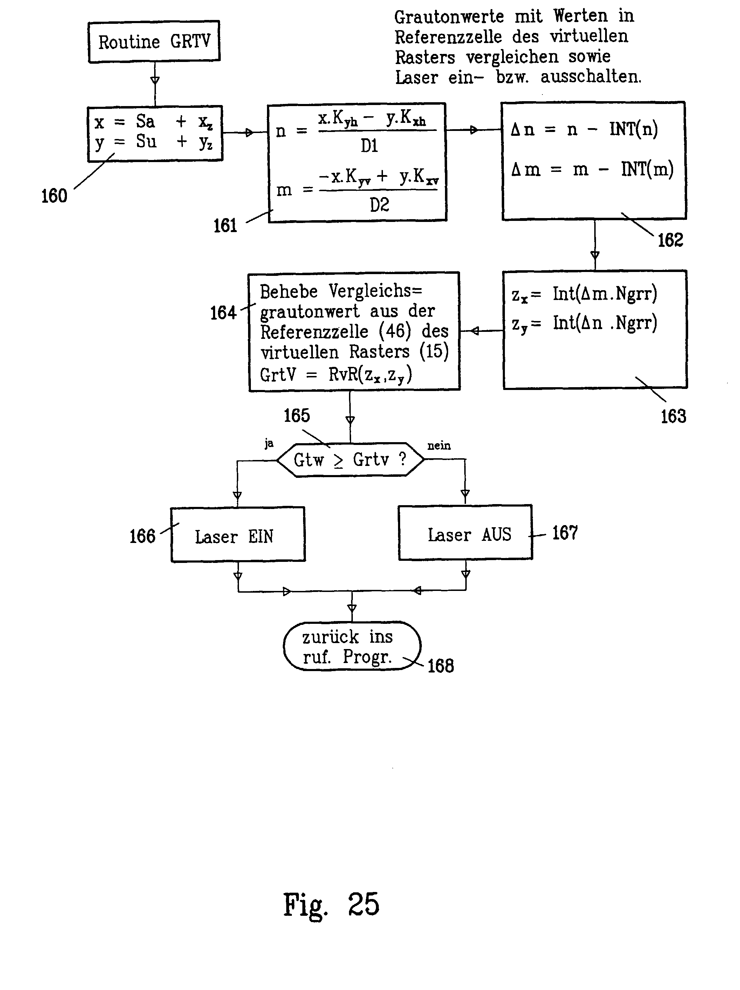

Schließlich ist anhand der Figur 25 das Unterproramm GRTV zu besprechen. Dieses transformiert mittels der Beziehungen (L01) die Koordinaten $(x_z, y_z)$ des Mittelpunktes eines durch eine Feinzelle 42 innerhalb der Grautonzelle 41 herausgeschnittenen Abschnitts der Schraubenlinie 20 in das Koordinatensystem der Referenzzelle 46 des virtuellen Rasters. Bei 160 werden aus $(x_z, y_z)$ und Sa, Su die Koordinaten x, y des eben genannten Mittelpunktes in Bezug auf den Startpunkt der Schablonengravur gebildet. Mittels der Rechenvorschrift 161 oder was dasselbe ist mit Hilfe der Beziehungen (L01) werden diese Koordinaten x, y in ein Koordinatensystem der Referenzzelle 46 des virtuellen Rasters 15 abgebildet, bei welchem sich der Ursprung des K.S. mit dem Startpunkt der Schablonengravur deckt. Die transformierten Koordinaten n, m sind, wie schon im Zusammenhang mit der Erstellung der Beziehungen (L01) ausgeführt wurde, nicht unbedingt ganzzahlig. Ganzzahlig sind die Werte n, m nur, wenn x und y zufällig die Koordinaten eines Netzlinienschnittpunktes sind. Hieraus folgt aber sofort, daß die Dezimalbruchanteile $\Delta n$ und $\Delta m$ dieser Werte den Lagekoordinaten innerhalb der Referenzzelle des virtuellen Rasters entsprechen. Daher werden gemäß der Rechenvorschrift 162 diese Dezimalbruchanteile dadurch gebildet, daß vom Wert von n dessen ganzzahliger Anteil (= INT(n)) abgezogen wird und ebenso mit dem Wert m verfahren wird. Zur endgültigen Bildung der Positionszahlen $z_x$ und $z_y$ müssen die Dezimalbruchwerte $\Delta n$ und $\Delta m$ nur noch mit Ngrr multipliziert werden und von diesem Produkt wiederum der ganzzahlige aber jetzt gerundete Anteil bestimmt werden. Dies geschieht mit der Rechenvorschrift 163. Ngrr entspricht der Zahl der Einzelzellen entlang einer Kante der Referenzzelle des virtuellen Rasters. Bei der hier vorausgesetzten programmäßigen Realisierung der Abspeicherung der Grautonwerte für die Referenzzelle 46 des virtuellen Rasters 15 wurden diese Werte in einem zweidimensionalen Speicherbereich untergebracht. Die Positionszahlen $z_x$ und $z_y$ können als die Indizes für diesen zweidimensionalen Bereich angesehen werden. Der Vergleichsgrautonwert Grtv kann dann bei 164 mit diesen Positionszahlen oder Indizes aus dem Speicherbereich behoben werden. Der Wert Gtw - der Grautonwert einer Feinzelle innerhalb der Referenzgrautonzelle - wurde schon früher (Figur 24, 130) ermittelt. Bei 165 erfolgt der Vergleich zwischen Gtw und Grtv, welcher darüber entscheidet, ob der Laser ein- oder ausgeschaltet wird 166, 167. Schließlich erfolgt bei 168 der Rücksprung ins rufende Programm.

Die weiter oben erläuterte Ermittlung der relativen Koordinaten über die Beziehungen (L01) vermeidet den Nachteil, der beispielsweise dadurch entsteht, daß sich kleine Fehler fortlaufend addieren und am Musterende, also dort, wo potentiell die Gefahr einer Nahtstellenbildung gegeben ist, ein großer Summenfehler gebildet werden kann. Dieser würde zu einem Fehlerbild führen, welches so wie eine Längsnaht aussehen würde.

Der ebenfalls innerhalb dieses Programmteils angesprochene Befehl zum Ein- oder Ausschalten gilt hier für einen Laser, der zur Bildung des Musters Teile der abdeckenden Lackschicht eines Siebzylinders z. B. durch thermische Einwirkung entfernt. Ein völlig gleichartiges Musterbild kann in einem gleichartigen lackversiegelten Siebzylinder auch dadurch zustandekommen, daß man die Lackschicht, die eine getrocknete aber noch nicht vernetzte (= polymerisierte) Harz- oder Vorpolymerschicht ist, durch die Einwirkung einer Laserstrahlung vernetzt und im Anschluß daran die nicht vernetzten und somit leichter löslichen Stellen in einem chemischen Entwicklungsprozeß herauslöst. Da in diesem Fall der Laser auf die verbleibenden Schichtbereiche einwirken muß und die zu entfernenden Schichtbereiche nicht bestrahlen darf, ist es erforderlich, den Ein- und Ausschaltbefehl gegenüber einem Laser, der den Lack abträgt, zu invertieren.

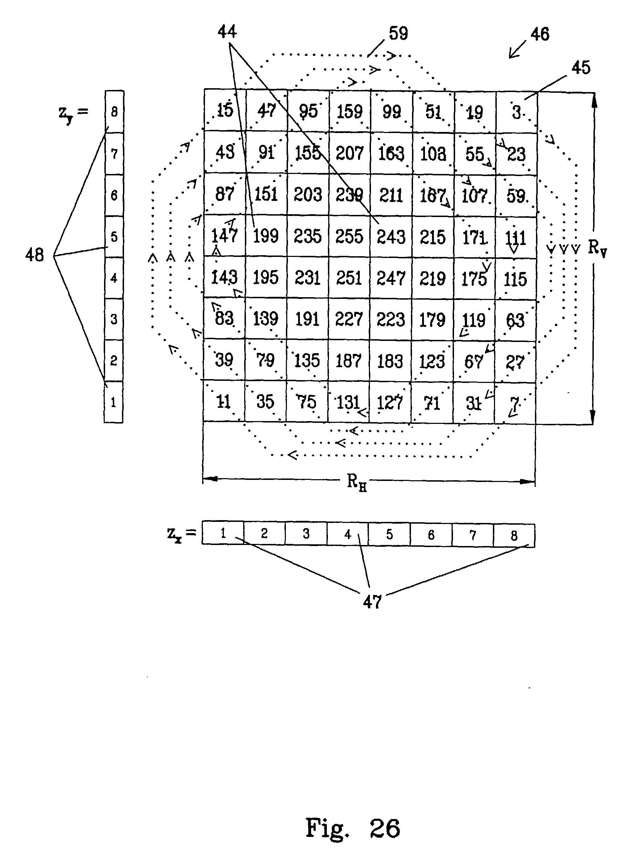

In Figur 26 wird eine weitere Referenzzelle 46 des virtuellen Rasters 15 besprochen, bei welcher die Eintragung der Grautonwerte in die Einzelzellen 44 gegenüber der Darstellung in Figur 15 einen etwas anderen Verlauf nimmt. Schon im Zusammenhang mit der Figur 15 wurde ausgeführt, daß die Grautonwerte, verfolgt man die Einzelzellen 44 innerhalb einer Referenzzelle 46 vom Rand zum Zentrum hin, eine monoton ansteigende Folge von Zahlenwerten bilden. Verfolgt man diese Zahlenwerte in Richtung steigender Werte, so erkennt man einen etwa spiralförmigen Verlauf. Während in Figur 15 die Lage der Teilstrecken der Spirale parallel zu den Umrandungen der Referenzzelle 46 des virtuellen Rasters gelegen sind, beschreibt der Verlauf der Einzelzellen mit steigenden Grautonwerten in Figur 25 eine Spirale 59, bei welcher die Teilstrecken dieser Spirale 59 parallel zu den diagonalen Richtungen der Referenzzelle 46 liegen. Durch diese Eintragung der Grautonwerte wird ein weicherer Ablauf der Grautöne gegenüber einer Werteintragung nach Figur 15 erzielt.

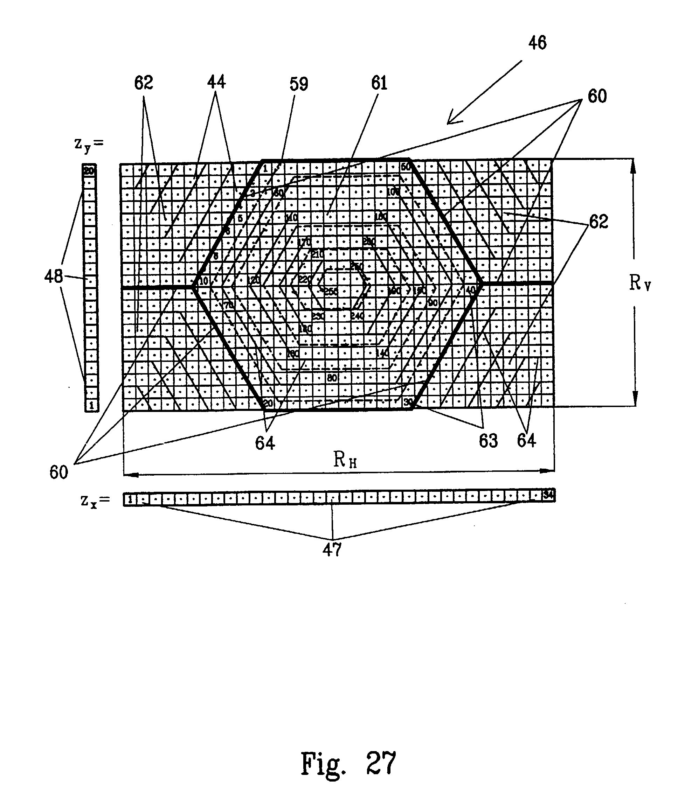

In Figur 27 wird eine weitere Möglichkeit einer erfindungsgemäßen Ausbildung einer Referenzzelle 46 des virtuellen Rasters 15 einschließlich der Eintragung der Grautonwerte gezeigt. Die hier dargestellte Referenzzelle 46 hat unterschiedliche Abmessungen $R_H$ und $R_V$ und auch unterschiedliche Maximalwerte für die horizontale Positionszahl 47 und die vertikale Positionszahl 48. Der Maximalwert der horizontalen Positionszahlen 47 beträgt 34, jener für die vertikalen Positionszahlen 48 beträgt 20. Im Inneren dieser nun rechteckförmigen Referenzzelle ist eine hexagonale Rasterstruktur 60 eingetragen. Durch mehrfaches Aneinanderfügen dieser Referenzzelle 46 in horizontaler und vertikaler Richtung läßt sich ein hexagonaler Raster oder ein hexagonales Wabennetz ausbilden und in dieses Einzelzellen 44 eintragen, welche ebenso wie jene der Figuren 15 und 26 über die zwei Positionszahlen 47, 48 adressierbar sind. Topologisch gesehen liegt hier die Folge der Einzelzellen 44, die steigende Grautonwerte 63 aufweisen, auf einer Spirale 59, die etwa parallel zu den Rändern der inneren Hexagonalzelle 61 gezogen ist. Die vier Hexagonalteilzellen 62 ergeben bei Aneinanderfügen mehrerer Referenzzellen 46 in den Eckpunkten der Referenzzellen 46 jeweils genau eine Hexagonalzelle 61, die dann auch die gleichen topologischen Strukturfolgen steigender Grautonwerte zeigen müssen. Die etwas verstärkt gezeichneten Linienzüge 64 beranden etwa kanalartige Bereiche gleicher Breite, die die Spirale 59 umgeben. Innerhalb eines so gebildeten Kanals etwa senkrecht zur Richtung der Spirale 59 liegen Einzelzellen 44, die etwa gleiche oder zumindest nur wenig unterschiedliche Grautonwerte aufweisen. Bei dieser Referenzzelle 46 scheint jeder zweite bis dritte Grautonwert doppelt auf, weil in einer Hexagonalzelle 61 dreihundertvierzig Einzelzellen 44 liegen und auf diese die Werte von 1 bis 255 aufzuteilen sind.

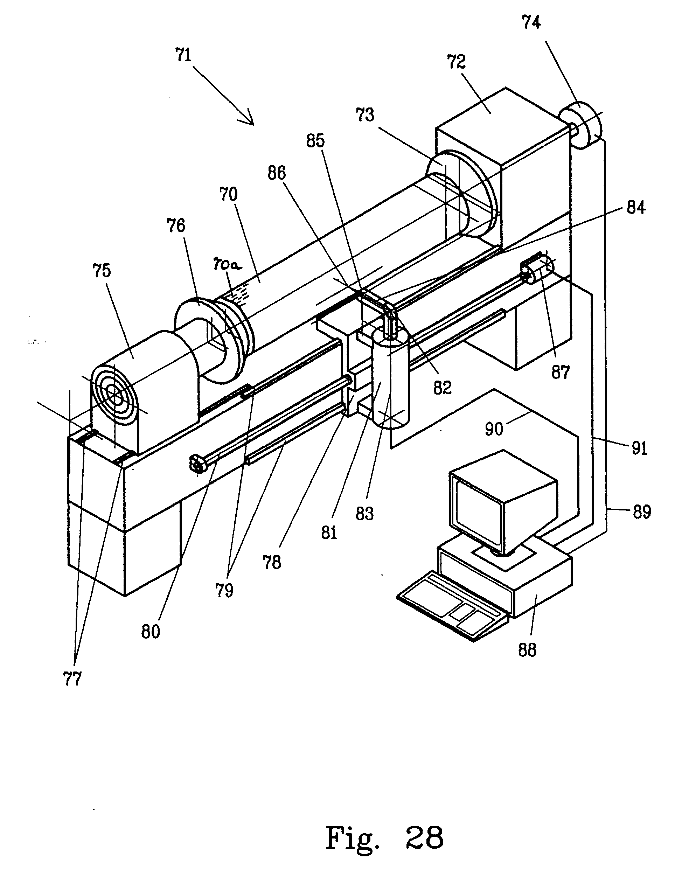

In Figur 28 wird schließlich das gravurtechnische Umfeld dargestellt, in welchem die Erfindung zum Einsatz gelangt. Ein dünnwandiger Hohlzylinder 70 wird in eine drehbankartige Einrichtung 71 eingelegt. In einem Spindelstockkasten 72 ist eine nicht sichtbare Welle gelagert, die an einem Ende einen Aufnahmekonus 73 trägt und an ihrem anderen Ende einen hochauflösenden Impulsgeber 74. In Längsrichtung des Hohlzylinders 70 betrachtet, liegt dem Spindelstockkasten 72 ein Reitstock 75 gegenüber, der einen ebenfalls drehbar gelagerten Stützkonus 76 trägt. Der Hohlzylinder 70 wird zwischen dem Aufnahmekonus 73 und dem Stützkonus 76 auf die gleiche Weise aufgenommen bzw. gehalten, wie dies mit einem Werkstück auf einer Drehbank zwischen zwei Körnerspitzen erfolgt. Der Aufnahmekonus 73 wird über die im Spindelstockkasten 72 gelagerte Welle und einen ebenfalls nicht mehr dargestellten Antriebsmotor in Drehung versetzt und nimmt nur über Reibungsschluß den Hohlzylinder 70 und auch den Stützkonus 76 mit. Weitere Mitnahmeeinrichtungen sind nicht erforderlich, weil während der Drehbewegung des Hohlzylinders 70 auf diesen keine anderen Kräfte einwirken als der durch die Drehung hervorgerufene Luftreibungswiderstand und der Lagerreibungswiderstand der den Stützkonus 76 aufnehmenden Kugellager im Reitstock 75. Anstelle des Hohlzylinders 70 kann auch eine Flexodruckwalze oder sogar eine massive Tiefdruckwalze in dieser Einrichtung behandelt werden. Allerdings müssen dann anstelle des Aufnahmekonus 73 und des Stützkonus 76 geeignete Spann- und Stützelemente verwendet werden. Der Reitstock 75 ist entlang von Führungen 77 in Achsrichtung des Hohlzylinders 70 verschiebbar angeordnet, so daß er auf unterschiedliche Längen verschiedener Hohlzylinder 70 eingestellt werden kann. An der Vorderseite der Einrichtung 71 ist ein Schlitten 78 in Längsrichtung des Hohlzylinders 70 bewegbar angeordnet. Der Schlitten 78 läuft auf Führungen 79 und wird durch eine Spindel 80 gezogen. Fest auf dem Schlitten montiert ist ein Laser 81. Die optische Achse 83 des Lasers verläuft vertikal. Der Laserstrahl 84 wird durch einen Umlenkspiegel 82 in eine horizontale Richtung umgelenkt, durch eine Optik 85 fokussiert und trifft genau im Fokuspunkt 86 der Optik 85 auf die Oberfläche des Hohlzylinders 70. Um eine genau mit der Drehbewegung des Hohlzylinders 70 abgestimmte Vorschubbewegung des Schlittens 78 und damit des Fokuspunktes 86 zu erhalten, wird die Spindel 80 durch einen Schrittmotor 87 angetrieben. Das auf der lack- oder polymerüberzogenen Oberfläche des Hohlzylinders 70 durch den Laser 81 bzw. den Laserstrahl 84 aufzubringende Musterbild soll durch die Gestaltung des Rasters in Übereinstimmung mit den Erfordernissen des darzustellenden Musters einen Halbtoneffekt im späteren Druckprozeß erbringen, in welchem der fertig graviert Hohlzylinder als Druckform verwendet wird. Zu diesem Zweck müssen die Feinheit derAufrasterung und der Vorschub des Schlittens 78 bzw. des Fokuspunktes 86 wählbar bleiben. Um alle diese Forderungen möglichst flexibel erfüllen zu können, ist ein Steuercomputer 88 vorgesehen, der Informationen über die jeweilige Drehlage des Hohlzylinders 70 über die Datenleitung 89 an den Steuercomputer 88 abgibt. Dieser ermittelt in Abhängigkeit von dem gewünschten Muster, für welches Informationen auf einem Massenspeichermedium z. B. der Festplatte des Steuercomputers 88 abgespeichert sind, sowohl die notwendigen Steuersignale an den Laser 81 als auch jene an den Schrittmotor 87. Die Signale an den Laser 81 werden über die Leitung 90 und einen nicht mehr dargestellten Leistungsverstärker abgegeben, jene an den Schrittmotor 87 über die Leitung 91 und ebenfalls über einen nicht mehr dargestellten Leistungsverstärker oder eine Treiberstufe. Es ist nicht unbedingt erforderlich, daß der Laser 81 mit dem Schlitten eine gemeinsam bewegte Einheit bildet, wenn dies auch den Vorteil eines stets gleich groß bleibenden Fokusfleckdurchmessers hat. Der Laser kann z. B. ortsfest und dann getrennt von der Einrichtung 71 aufgestellt werden. Der Laserstrahl wird in diesem Fall durch geeignete Umlenkeinrichtungen parallel zur Achse des Hohlzylinders und der Schlittenbewegung geführt und durch einen Umlenkspiegel auf dem Schlitten 78 auf die Oberfläche des Hohlzylinders 70 gerichtet. Der Lack oder die lichtempfindliche Schicht auf der Oberfläche des Hohlzylinders 70 kann an den durch das Musterbild vorgeschriebenen Stellen durch den Laser 81 abgetragen (abgedampft, photolythisch zersetzt) oder aber gehärtet (polymerisiert, vernetzt) werden und an den nicht gehärteten Stellen anschließend ausgewaschen werden. Wenn es die Strahlenergie und die Eigenschaften eines Lichtleiters zulassen, kann der Laserstrahl auch über einen Lichtleiter zur fokussierenden Optik 85 auf dem Schlitten 78 geleitet werden.

**Patentansprüche**

**1.** Verfahren zur Herstellung einer Grautonschablone, bei dem

- eine Mustervorlage (1) punktweise optisch abgetastet wird, um für die jeweiligen Abtastpunkte Grautonwerte zu erhalten;
- eine Grauwerttabelle (7) zwischengespeichert wird, die aus Bildpunkten der Mustervorlage entsprechenden Grautonzellen (8) zusammengesetzt ist, die jeweils einen der abgetasteten Grautonwerte enthalten, um so die Mustervorlage (1) wenigstens bereichsweise als Bitmap darzustellen;
- zum Übertragen der Mustervorlage (1) auf einen Schablonenrohling (70) zunächst Grautonwerte aus denjenigen Grautonzellen (8) ausgelesen werden, die entlang einer Bahn (20) durch die Grauwerttabelle (7) liegen;
- der aus jeweils einer Grautonzelle (8) ausgelesene Grautonwert mit einem Referenz-Grautonwert verglichen wird, der in einer der Grautonzelle (8) zugeordneten Referenzzelle (46) eines der Grauwerttabelle (7) überlagerten Raster (15) enthalten ist; und
- der Schablonenrohling (70) entlang einer der Bahn (20) durch die Grauwerttabelle (7) entsprechenden Bahn mit einem Strahl (84) belichtet wird, der in Abhängigkeit des Vergleichsergebnisses ein- bzw. ausgeschaltet wird,

**dadurch gekennzeichnet,** daß

- der Raster (15) über die Ränder der Mustervorlage (1) kontinuierlich fortgesetzt wird.

**2.** Verfahren nach Anspruch 1, **dadurch gekennzeichnet**, daß die Mustervorlage (1) zeilen- oder spaltenweise abgetastet wird, um zumindest Teile von Zeilen oder Spalten als Grauwertabelle (7) zwischenzuspeichern.

**3.** Verfahren nach Anspruch 1, **dadurch gekennzeichnet,** daß die Mustervorlage (1) als zweidimensionale Grauwerttabelle (7) zwischengespeichert wird.

**4.** Verfahren nach einem der Ansprüche 1 bis 3, **dadurch gekennzeichnet,** daß die Grautonzellen (8) in Feinzellen (41) unterteilt werden und ein Vergleich von Grautonwerten der Feinzellen (41) mit dem Referenz-Grautonwert erfolgt.

**5.** Verfahren nach Anspruch 4, **dadurch gekennzeichnet,** daß die Unterteilung der Grautonzellen (8) in Feinzellen (41) erst dann erfolgt, wenn die für die Bestrahlung des Schablonenrohlings (70) auszulesende Grautonzelle (8) aufgerufen wird.

**6.** Verfahren nach Anspruch 4 oder 5, **dadurch gekennzeichnet**, daß die Grautonwerte der Feinzellen (41) in Abhängigkeit der Grautonwerte von Feinzellen (41) wenigstens einer benachbarten Grautonzelle (8) oder in Abhängigkeit des Grautonwerts wenigstens einer benachbarten Grautonzelle (8) vorgegeben werden.

**7.** Verfahren nach einem der Ansprüche 1 bis 6, **dadurch gekennzeichnet,** daß die Referenzzelle (46) aus Einzelzellen (44) zusammengesetzt ist, die wenigstens zum Teil unterschiedliche Referenz-Grautonwerte enthalten.

**8.** Verfahren nach Anspruch 7, **dadurch gekennzeichnet**, daß die Referenz-Grautonwerte spiralförmig vom Rand der Referenzzelle (46) zu deren Zentrum hin ansteigen oder abfallen.

**9.** Verfahren nach einem der Ansprüche 1 bis 8, **dadurch gekennzeichnet,** daß der Raster (15) aus additionsfähigen Rasterzellen (61) aufgebaut ist, die jeweils innerhalb einer Referenzzelle (46) liegen, die größer als die Rasterzelle (61) ist.

**10.** Verfahren nach einem der Ansprüche 1 bis 9, **dadurch gekennzeichnet,** daß der Raster (15) relativ zur Mustervorlage (1) bzw. der sie darstellenden Grauwerttabelle (7) gedreht ist.

**11.** Verfahren nach einem der vorstehenden Ansprüche, **dadurch gekennzeichnet,** daß die kontinuierliche Fortsetzung des Rasters (15) dadurch erzielt wird, daß er eine zusätzliche Feindrehung und Stauchung bzw. Streckung erfährt.

**12.** Verfahren nach Anspruch 11, **dadurch gekennzeichnet,** daß die Stauchung bzw. Streckung in unterschiedlichen Richtungen der Mustervorlage (1) bzw. der Grauwerttabelle (7) verschieden ist.

**13.** Verfahren nach Anspruch 11 oder 12, **dadurch gekennzeichnet,** daß die Koordinaten $z_x$, $z_y$ der Einzelzellen (44) der Referenzzelle (46) durch eine lineare Transformation der Koordinaten der Grautonzellen (8) bzw. der Koordinaten ($x_z$, $y_z$) der Feinzellen (41) bestimmt werden.

**14.** Verfahren nach einem der vorstehenden Ansprüche, **dadurch gekennzeichnet,** daß Mustervorlage (1) und Raster (15) auf einen rotierenden, zylindrischen Schablonenrohling (70) übertragen werden.

**15.** Verfahren nach Anspruch 14, **dadurch gekennzeichnet,** daß auf dem zylindrischen Schablonenrohling (70) eine strahlungsempfindliche Schicht (70a) liegt.

**16.** Verfahren nach Anspruch 14, **dadurch gekennzeichnet,** daß der zylindrische Schablonenrohling (70) ein Siebzylinder ist, der auf seiner Oberfläche eine strahlungsempfindliche Schicht (70a) trägt.

**17.** Verfahren nach Anspruch 15 oder 16, **dadurch gekennzeichnet,** daß die strahlungsempfindliche Schicht (70a) eine Lackschicht ist.

**18.** Verfahren nach einem der vorstehenden Ansprüche, **dadurch gekennzeichnet**, daß der Strahl (84) zur Belichtung des Schablonenrohlings (70) durch einen Laser (81) erzeugt wird.

**19**

**Claims**

1.  Method for producing a grey-shade stencil, in the case of which

    -   a pattern master (1) is optically scanned point-by-point in order to obtain grey-shade values for the respective scanning points;
    -   a grey-shade table (7) is temporarily stored, which is composed of pixels of grey-shade cells (8) corresponding to the pattern master, which each contain one of the scanned grey-shade values, in order in this way to represent the pattern master (1) as a bitmap, at least in places;
    -   in order to transfer the pattern master (1) to a stencil blank (70), grey-shade values are first of all read from those grey-shade cells (8) which are located along a path (20) through the grey-shade table (7);
    -   the grey-shade value read from in each case one grey-shade cell (8) is compared with a reference grey-shade value, which is contained in a reference cell (46), assigned to the grey-shade cell (8), in a grid (15) superimposed on the grey-shade table (7); and
    -   the stencil blank (70) is exposed by means of a beam (84) along a path corresponding to the path (20) through the grey-shade table (7), and this beam is switched on an off depending on the comparison result,

    **characterized** in that

    -   the grid (15) is continued continuously beyond the edges of the pattern master (1).

2.  Method according to Claim 1, **characterized** in that the pattern master (1) is scanned in lines or columns for interim storage of at least parts of lines or columns as a grey-shade table (7).

3.  Method according to Claim 1, **characterized** in that the pattern master (1) is stored on an interim basis as a two-dimensional grey-shade table (7).

4.  Method according to one of Claims 1 to 3, **characterized** in that the grey-shade cells (8) are divided into fine cells (41) and a comparison of grey-shade values of the fine cells (41) with the reference grey-shade value is carried out.

5.  Method according to Claim 4, **characterized** in that the division of the grey-shade cells (8) into fine cells (41) is not carried out until the grey-shade cell (8) which is to be read out for the exposure of the stencil blank (70) is called up.

6.  Method according to Claim 4 or 5, **characterized** in that the grey-shade values of the fine cells (41) are predetermined as a function of the grey-shade values of fine cells (41) of at least one adjacent grey-shade cell (8), or as a function of the grey-shade value of at least one adjacent grey-shade cell (8).

7.  Method according to one of Claims 1 to 6, **characterized** in that the reference cell (46) is composed of individual cells (44), at least some of which contain different reference grey-shade values.

8.  Method according to Claim 7, **characterized** in that the reference grey-shade values rise or fall in a spiral shape from the edge of the reference cell (46) towards its centre.

9.  Method according to one of Claims 1 to 8, **characterized** in that the grid (15) is formed from grid cells (61) which may be added and are in each case located within a reference cell (46) which is larger than the grid cell (61).

10. Method according to one of Claims 1 to 9, **characterized** in that the grid (15) is rotated relative to the pattern master (1) or to the grey-shade table (7) representing it.

11. Method according to one of the preceding claims, **characterized** in that the continuous continuation of the grid (15) is achieved by additionally rotating it slightly and compression or stretching.

12. Method according to Claim 11, **characterized** in that the compression or stretching is different in different directions of the pattern master (1) or of the grey-shade table (7).

13. Method according to Claim 11 or 12, **characterized** in that the coordinates $z_x$, $z_y$ of the individual cells (44) of the reference cell (46) are determined by linear transformation of the coordinates of the grey-shade cells (8) or the coordinates $X_z$, $Y_z$ of the fine cells (41).

14. Method according to one of the preceding claims, **characterized** in that the pattern master (1) and grid (15) are transferred to a rotating, cylindrical stencil blank (70).

15. Method according to Claim 14, **characterized** in that a radiation-sensitive layer (70a) is located on the cylindrical stencil blank (70).

16. Method according to Claim 14, **characterized** in that the cylindrical stencil blank (70) is a sieve cylinder, which has a radiation-sensitive layer (70a) on its surface.

17. Method according to Claim 15 or 16, **characterized** in that the radiation-sensitive layer (70a) is a varnish layer.

18. Method according to one of the preceding claims, **characterized** in that the beam (84) for exposing the stencil blank (70) is produced by means of a laser (81).

**Revendications**

1. Procédé pour la production de modèles ou patrons à tonalités de gris, dans lequel

   - un modèle original (1) est balayé point par point de manière optique dans le but d'obtenir des valeurs de tonalités de gris pour chacun des points de balayage;
   - un tableau de valeurs de gris (7) est mémorisé de façon temporaire, tableau constitué de cellules à tonalités de gris (8) correspondant aux points de l'image du modèle original, chacune des cellules renfermant une des valeurs de tonalités de gris balayées, afin de représenter au moins partiellement le modèle original (1) en tant qu'image-point (bitmap);
   - on lit d'abord pour transférer le modèle original (1) sur une pièce brute patron (70), les valeurs de tonalités de gris issues de ces cellules à tonalités de gris (8) se trouvant le long d'un trajet (20) dans le tableau de valeurs de gris (7);
   - on compare la valeur de tonalités de gris lue à partir de chacune des cellules à tonalités de gris (8) à une valeur de tonalités de gris de référence, que renferme une cellule référence (46) attribuée à la cellule à tonalité de gris (8) d'une trame (15) superposée au tableau de valeurs de gris (7); et
   - la pièce brute patron (70) est éclairée par un faisceau lumineux (84) le long d'un trajet correspondant au trajet (20) dans le tableau de valeurs de gris (7), l'émission du faisceau lumineux étant fonction du résultat de la comparaison,

     caractérisé en ce que

   - la trame (15) est prolongée de façon continue au-dessus bords du modèle original (1).

2. Procédé selon la revendication 1, caractérisé en ce que le modèle original (1) est balayé par lignes ou par colonnes, afin de mémoriser de façon temporaire au moins des parties de lignes ou de colonnes en tant que tableau de valeurs de gris (7).

3. Procédé selon la revendication 1, caractérisé en ce que le modèle original (1) est mémorisé de façon temporaire en tant que tableau de valeurs de gris bidimensionnel (7).

4. Procédé selon l'une quelconque des revendications 1 à 3, caractérisé en ce que les cellules à tonalités de gris (8) sont subdivisées en cellules fines (41) et en ce qu'une comparaison de valeurs à tonalités de gris des cellules fines (41) est effectuée par rapport à une valeur de tonalités de gris de référence.

5. Procédé selon la revendication 4, caractérisé en ce que la subdivision des cellules à tonalités de gris (8) en cellules fines (41) est seulement effectuée lorsque la cellule à tonalités de gris (8) devant être lue pour l'irradiation de la pièce brute patron (70) est appelée.

6. Procédé selon la revendication 4 ou 5, caractérisé en ce que les valeurs à tonalités de gris des cellules fines (41) sont déterminées en fonction des valeurs à tonalités de gris des cellules fines (41) d'au moins une cellule à tonalités de gris (8) voisine ou en fonction de la valeur à tonalités de gris d'au moins une cellule à tonalités de gris (8) voisine.

7. Procédé selon l'une quelconque des revendications 1 à 6, caractérisé en ce que la cellule de référence (46) est composée de cellules individuelles (44) qui renferment au moins en partie différentes valeurs de tonalités de gris de référence.

8. Procédé selon la revendication 7, caractérisé en ce que les valeurs de tonalités de gris de référence montent ou descendent en forme de spirale du bord de la cellule de référence (46) par rapport à son centre.

9. Procédé selon l'une quelconque des revendications 1 à 8, caractérisé en ce que la trame (15) est constituée de cellules de trame (61) additionnables qui se trouvent chaque fois à l'intérieur d'une cellule de référence (46) plus grande que la cellule de trame (61).

10. Procédé selon l'une quelconque des revendications 1 à 9, caractérisé en ce que la trame (15) est pivotée par rapport au modèle original (1) ou au tableau de valeurs de gris (7) le représentant.

11. Procédé selon l'une quelconque des revendications précédentes, caractérisé en ce que le prolongement de façon continue de la trame (15) est obtenu grâce à un léger pivotement et une compression ou extension supplémentaires.

12. Procédé selon la revendication 11, caractérisé en ce que la déformation ou l'extension est différent dans différents sens du modèle original (1) ou du tableau de valeurs de gris (7).

13. Procédé selon la revendication 11 ou 12, caractérisé en ce que les coordonnées $z_x$, $z_y$ des cellules individuelles (44) de la cellule de référence (46) sont définies par une transformation linéaire des coordonnées des cellules à tonalités de gris (8) ou des coordonnées ($x_z$, $y_z$) des cellules fines (41).

14. Procédé selon l'une quelconque des revendications précédentes, caractérisé en ce que le modèle original (1) et la trame (15) sont transférés sur une pièce brute patron cylindrique et rotative (70).

15. Procédé selon la revendication 14, caractérisé en ce qu'une couche (70a) sensible aux rayons lumineux se trouve sur la pièce brute patron cylindrique (70).

16. Procédé selon la revendication 14, caractérisé en ce que la pièce brute patron cylindrique (70) est un cylindre perforé portant une couche (70a) sensible aux rayons lumineux sur sa surface.

17. Procédé selon la revendication 15 ou 16, caractérisé en ce que la couche (70a) sensible aux rayons lumineux est une couche de laque.

18. Procédé selon l'une quelconque des revendications précédentes, caractérisé en ce que le rayon lumineux (84) est produit pour éclairer la pièce brute patron (70) par l'intermédiaire d'un laser (81).

**Fig.1**

**Fig.2**

Fig.3

Fig.4

Fig.5

Fig.6

Fig. 7

Fig. 8

Fig.9

Fig. 10

Fig. 11

Fig. 12

Fig. 13

Fig. 14

Fig. 15

Fig. 16

Fig. 17

Fig. 18

Fig. 19

Fig. 20

Fig. 21

START HAUPTROUTINE

Erforderliche globale Parameter berechnen bzw. abfragen.

**Abfragen:** — 100
b, h, v, N1, N2
Au, Aa, tu, ta
$\alpha$, $\beta$
Nlngs, Ngrr, Nu

**Berechnen:** — 101

$dGa = Au \cdot \tan(\beta)$
$dGu = Aa / \tan(\beta)$

$dga = tu \cdot \tan(\beta)$
$dgu = ta / \tan(\beta)$

$a_x = \dfrac{-b \cdot y_1}{x_1 \cdot y_2 - x_2 \cdot y_1}$

$a_y = \dfrac{b \cdot x_1}{x_1 \cdot y_2 - x_2 \cdot y_1}$

— 102

$b_x = (v \cdot y_1 - h \cdot y_2) / x_1 \cdot (y_1 - y_2)$

$b_y = (h - v) / (y_1 - y_2)$

$K_{xv} = \sin(\alpha) \cdot a_x + \cos(\alpha) \cdot a_y$
$K_{xh} = \cos(\alpha) \cdot a_x - \sin(\alpha) \cdot a_y$
$K_{yv} = \sin(\alpha) \cdot b_x + \cos(\alpha) \cdot b_y$
$K_{yh} = \cos(\alpha) \cdot b_x - \sin(\alpha) \cdot b_y$

$D1 = R_V \cdot (K_{xv} \cdot K_{yh} - K_{yv} \cdot K_{xh})$
$D2 = R_H \cdot (K_{xv} \cdot K_{yh} - K_{yv} \cdot K_{xh})$

**Startbedingung herstellen:** — 103

$x_{RG} = 0 : y_{RG} = 0$

Schleife
Längsadditionen:

Sa = 0

For I = 1 to Nlngs

Call GTAB

Sa = Sa−b

} — 106

nein    I $\geq$ Nlngs    ja    STOP

**Fig. 22**

33

Routine GTAB

Additionsbild (14) erzeugen
und Grauwerttabelle (7) durchlaufen

110

ZNr=1, Nul=0, Nl=0, Su = 0, Liflg=0

112

nein    Liflg=−1 ?    ja

113

115    111

Call RGTZ

$x_{RGN} = x_{RG} + dGa$

114

$x_{RGN} = x_{RGN} - Aa$

116

Entscheide:

| $x_{RGN} <Aa$ .and. $x_{RGN} >0$ | $x_{RGN} = Aa$ | $x_{RGN} > Aa$ |

Zelleintrittspunkt: 117
unterer Rand

Zelleintrittspunkt: 118
Ecke links unten

Zelleintrittspunkt: 119
linker Rand

Nul = Nul + 1
ZNr = ZNr + 1
Su = Su + Au

$x_{RG} = x_{RGN}$
$y_{RG} = 0$
Liflg = 0

Nul = Nul + 1
ZNr = ZNr+Nu+1
Su = Su + Au
Sa = Sa + Aa
$x_{RG} = 0$
$y_{RG} = 0$
Liflg = 0
$x_{RGN} = 0$

ZNr = ZNr + Nu

Sa = Sa + Aa
$y_{RG} = (Aa - x_{RG})/\tan(\beta)$
$x_{RG} = 0$
Liflg = −1

120

nein    Nul=Nu ?    ja

124

nein    Sa ≥ b ?

121

Nl = Nl + 1
Nul = 0
ZNr = ZNr−Nu

123    Nl = 0
Su = 0

125

zurück

ja

nein    Nl=Numf ?    ja

122

Fig. 23

Fig. 24

Routine GRTV

Grautonwerte mit Werten in
Referenzzelle des virtuellen
Rasters vergleichen sowie
Laser ein- bzw. ausschalten.

$$x = Sa + x_z$$
$$y = Su + y_z$$

160

$$n = \frac{x.K_{yh} - y.K_{xh}}{D1}$$

$$m = \frac{-x.K_{yv} + y.K_{xv}}{D2}$$

161

$$\Delta n = n - INT(n)$$

$$\Delta m = m - INT(m)$$

162

Behebe Vergleichs=
grautonwert aus der
Referenzzelle (46) des
virtuellen Rasters (15)
$GrtV = RvR(z_x,z_y)$

164

$$z_x = Int(\Delta m.Ngrr)$$
$$z_y = Int(\Delta n .Ngrr)$$

163

165

ja        $Gtw \geq Grtv$ ?        nein

Laser EIN        166

Laser AUS        167

zurück ins
ruf. Progr.        168

# Fig. 25

Fig. 26

Fig. 27

Fig. 28